# EUROPEAN PATENT APPLICATION

(11) **EP 3 745 184 A1**
(43) Date of publication of application: **02.12.2020**
(21) Application number: 20170589.4
(22) Date of filing: 21.04.2020
(51) Int. Cl.: G02B 27/01, G02B 26/10

(54) **OPTICAL SCANNER, DISPLAY SYSTEM, AND MOBILE OBJECT**

(30) Priority: 29.05.2019 JP 2019100580
(71) Applicant: Ricoh Company, Ltd., Tokyo 143-8555 (JP)
(72) Inventor: TANAKA, Hiroaki, Tokyo, 143-8555 (JP)
(74) Representative: J A Kemp LLP

(57) **Abstract**

An optical scanner (100) includes a light source (11), a light deflector (13), a controller (17), and a photosensor (61). The light deflector (13) deflects light from the light source (11) to scan a scanning range in a first scanning direction and a second scanning direction. The scanning range includes an image displaying area and a detection area. The controller (17) controls the light source (11) to emit a light beam based on image data when the light deflector (13) forms an image within the image displaying area, and controls the light source (11) to emit another light beam when the light deflector (13) scans the detection area with said another light beam. The photosensor (61) detects said another light beam scanning the detection area. A shielding area is provided to block off said another light beam deflected by the light deflector (13) between the image displaying area and the detection area.

## Description

### BACKGROUND

### Technical Field

The present disclosure relates to an optical scanner, a display system incorporating the optical scanner, and a mobile object incorporating the display system.

### Related Art

JP-2018-005007-A discloses an optical scanner having an optical scanning range including a detection area and an image drawing area used for drawing an image. The image drawing area includes an area adjacent to the detection area in a main scanning direction, and an area adjacent to the detection area in a sub-scanning direction.

If the light casted on the detection area is strayed into the image drawing area, the image quality might decrease.

### SUMMARY

In view of the above, it is an object of the present invention to provide an optical scanner, a display system incorporating the optical scanner, and a mobile object incorporating the display system that achieves a reduction of the influence of irradiation light outside the image area.

In one aspect of this disclosure, there is described an improved optical scanner including a light source, a light deflector, and a controller, and a photosensor. The light deflector is configured to deflect light emitted from the light source to scan a scanning range in a first scanning direction and a second scanning direction orthogonal to the first scanning direction. The scanning range includes an image displaying area and a detection area outside the image displaying area. The controller is configured to control the light source to emit a light beam based on image data when the light deflector forms an image within the image displaying area, and control the light source to emit another light beam when the light deflector scans the detection area with said another light beam. The photosensor is configured to detect said another light beam scanning the detection area. A shielding area is provided to block off said another light beam deflected by the light deflector between the image displaying area and the detection area.

Further described is a display system including the above-described optical scanner; an imaging optical system configured to reflect the light that has been deflected by the light deflector to scan the screen and projected by the screen, and a reflector configured to reflect the light reflected from the imaging optical system so as to form a virtual image of the light.

Still further described is a mobile object including the above-described display system. The reflector is a windshield.

The embodiments of the present disclosure provide an optical scanner, a display system incorporating the optical scanner, and a mobile object incorporating the display system that achieves a reduction of the influence of irradiation light outside the image area.

### BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:
FIG. 1 is an illustration of an example of a system configuration of a display system according to an embodiment;
FIG. 2 is a block diagram of a hardware configuration of a display device according to an embodiment of the present disclosure;
FIG. 3 is an illustration of an example of a specific configuration of a light-source device according to an embodiment of the present disclosure;
FIG. 4 is an illustration of a specific configuration of a light deflector according to an embodiment of the present disclosure;
FIG. 5 is an illustration of an example of a specific configuration of a screen according to an embodiment of the present disclosure;
FIGs. 6A and 6B are illustrations for describing a difference in operation due to differences in sizes of the diameter of incident light flux and the lens diameter in a microlens array;
FIG. 7 is an illustration for describing the relation of a mirror and a scanning range of the light deflector;
FIG. 8 is an illustration of an example of a trajectory of a scanning line when two-dimensional scanning is performed, according to an embodiment of the present disclosure;
FIGs. 9A and 9B are illustrations for describing the shape of a screen;
FIGs. 10A, 10B, and 10C are illustrations for describing a light receiver;
FIG. 11 is an illustration of an augmented reality (AR) overlaid image displayed;
FIGs. 12A and 12B are illustrations for describing a drive voltage and a deflection angle sensitivity of the light deflector;
FIG. 13 is an illustration of a configuration of a correcting process according to an embodiment of the present disclosure;
FIG. 14 is a front view of a holder of the screen according to an embodiment of the present disclosure;
FIG. 15 is a perspective view of the holder in FIG. 14;
FIG. 16 is an illustration of an optical path in the configuration of FIG. 14;
FIGs. 17A and 17B are illustration of an optical path in a holder according to a first modification of the holder in FIG. 14;
FIG. 18 is an illustration of a holder according to a second modification of the holder in FIG. 14;
FIG. 19 is an illustration of a holder according to a third modification of the holder in FIG. 14;
FIG. 20 is an illustration of an optical path in the configuration of FIG. 19;
FIGs. 21A, 21B, 21C, and 21D are illustrations for describing the output power of a light source;
FIGs. 22A, 22B, and 22C are illustration for describing the detection of scanning positions;
FIGs. 23A, 23B, 23C, and 23D are illustrations for describing the resolution for the detection of scanning positions;
FIGs. 24A and 24B are illustrations for describing the direction in which resin is injected to form the screen;
FIG. 25 is a block diagram of a functional configuration of a controller according to an embodiment of the present disclosure;
FIG. 26 is an illustration for describing a layout of the configuration in FIG. 13;
FIG. 27 is an illustration for describing a configuration of the correcting process according to a first modification of the embodiment in FIG. 13;
FIG. 28 is an illustration for describing a configuration of the correcting process according to a second modification of the embodiment in FIG. 13;
FIGs. 29A, 29B, and 29C are illustrations for describing the changes in the scanning angle in the sub-scanning direction over time;
FIG. 30 is an illustration of a layout of the configuration in FIG. 28;
FIG. 31 is an illustration for describing a configuration of the correcting process according to a third modification of the embodiment in FIG. 13; and
FIG. 32 is a graph for describing a detection resolution with respect to the image size in FIG. 31.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Hereafter, an embodiment for implementing the disclosure is described with reference to the drawings. In the description of the drawings, the same elements are denoted by the same reference numerals, and redundant description is omitted.

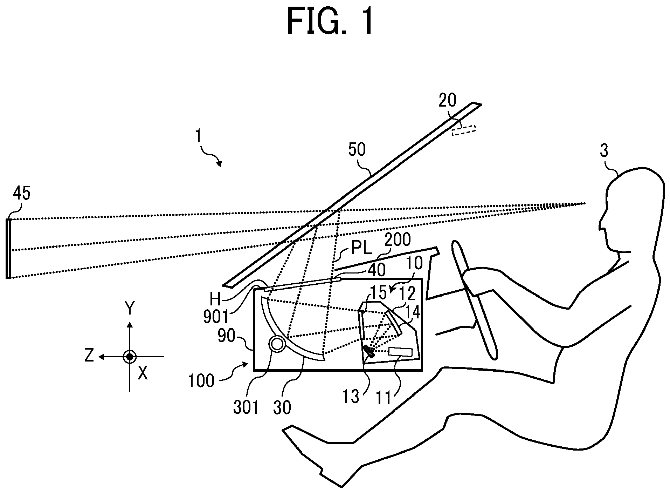

FIG. 1 is an illustration of an example of the configuration of a display system 1 according to an embodiment of the present disclosure. In the display system 1, the observer 3 can visually identify a display image as the projection light PL that is projected from a display device 100 (an example of an optical scanner) is projected onto a transmissive reflector. The display image is image superimposed on the viewing field of the observer 3 as a virtual image 45. For example, the display system 1 is provided for a mobile object such as a vehicle, an aircraft, and a ship, or an immobile object such as a maneuvering simulation system, and a home-theater system. In the present embodiment, cases in which the display system 1 is provided on a vehicle as an example of a mobile object is described. However, no limitation is intended thereby, and the type of usage of the display system 1 is not limited to the present embodiment.

For example, the display system 1 is mounted in a vehicle, and makes navigation information visible to the observer 3 (i.e., the driver) through a windshield 50 of the vehicle. The navigation information includes, for example, the information about the speed of the vehicle, the course information, the distance to a destination, the name of the current place, the presence or position of an object ahead of the vehicle, a traffic sign indicating, for example, speed limit, and traffic congestion, and aids the driving of the vehicle. In this case, the windshield 50 functions as a transmissive reflector that transmits a portion of incident light and reflects at least a portion of the residual portion of the incident light. The distance between the location of the eyepoint of the observer 3 and the windshield 50 is about several tens of centimeters (cm) to one meter (m).

The display system 1 includes the display device 100, an extraneous light sensor 20, and a windshield 50. For example, the display device 100 is a heads-up display (HUD) provided for a vehicle as an example of the mobile object. The display device 100 may be arranged at any desired position in conformity with the interior design of the vehicle. For example, the display device 100 according to the present embodiment may be disposed under a dashboard 200 of the vehicle or built into the dashboard of the vehicle.

Moreover, the display device 100 includes an image forming unit 10, a free-form surface mirror 30, and a housing 90. The image forming unit 10, which is an example of an optical scanner, includes a light-source device 11, a unit housing 12, a light deflector 13, a mirror 14, and a screen 15. The extraneous light sensor 20 is a sensing device that is disposed to detect, for example, the illuminance as the intensity of extraneous light of the display system 1. As illustrated in FIG. 1, for example, the extraneous light sensor 20 is arranged near the windshield 50.

The light-source device 11 that is an example of a light source is a device that emits the laser beams emitted from light-source elements to an area outside the device. For example, the light-source device 11 may emit laser beams in which three-color laser beams of red, green, and blue (RGB) are combined. The laser beams that are emitted from the light-source device 11 are guided to the reflecting plane of the light deflector 13. The light-source device 11 includes, as a light source, a semiconductor light emitting element such as a laser diode (LD). However, no limitation is intended thereby, and the light source may be a semiconductor light-emitting element such as a light-emitting diode (LED).

The light deflector 13 as an example of a light deflector uses, for example, a micro-electromechanical systems (MEMS) to change the directions of travel of the laser beams. The light deflector 13 includes, for example, a scanner, such as one micro MEMS mirror that swings about two orthogonal axes or a mirror system including two MEMS mirrors that each swings or rotates about one axis. The laser beams that are emitted from the light deflector 13 scans the mirror 14. The light deflector 13 may include a polygon mirror or the like instead of the MEMS mirror.

For example, the mirror 14 is a concave mirror, and reflects the laser beams, which are deflected by the light deflector 13 and scan the reflection plane of the mirror 14, towards the screen 15.

A two-dimensional intermediate image (image light) is formed on the screen 15, which serves as an image forming unit, as the laser beams reflected by the reflection plane of the mirror 14 scan the surface of the screen 15. Note also that the screen 15 serves as a divergent part through which the scanned laser beams diverge at a predetermined divergence angle. The screen 15 includes, for example, as a form of an exit pupil expander (EPE), a transmissive optical element having light diffusing effect, such as a microlens array (MLA) or a diffusion plate. The screen 15 may be a reflective optical element having light diffusing effect such as a micromirror array.

The light-source device 11, the light deflector 13, the mirror 14, and the screen 15 are stored in the unit housing 12, and serve as a part of the image forming unit 10. The screen 15 is not covered by the unit housing 12 in its entirety such that the diverging light diverging through the screen 15 can be emitted outside the image forming unit 10, but is partially held by the unit housing 12. The unit housing 12 may be a single unit of three-dimensional object, or may be configured by a combination of a plurality of members. As an example configuration or structure in which a combination of a plurality of members are combined, the unit housing 12 may be configured by a combination of a plurality of members including the light-source device 11, the light deflector 13, the mirror 14, a three-dimensional object that covers the optical path in its entirety, and a holder or the like that holds the screen 15.

The virtual image 45 is a magnified view of the intermediate image that is formed on the screen 15, and such a virtual image is achieved as the laser beams (light flux) that are the light diverging through the screen 15 are projected onto the free-form surface mirror 30 and the windshield 50. The free-form surface mirror 30 is designed and arranged so as to cancel, for example, the inclination of the image, the distortion of the image, and the misalignment of the image, which are caused by the bent shape of the windshield 50. The free-form surface mirror 30 may be arranged in a pivotable manner around a rotation axis 301. For example, the rotation axis 301 passes through the center of gravity of the free-form surface mirror 30, and the free-form surface mirror 30 is rotated on a straight line parallel to the direction orthogonal to the sheet of FIG. 1 to change the position at which the virtual image 45 is displayed in the up-and-down directions on the sheet of FIG. 1. Due to such a configuration, the free-form surface mirror 30 can adjust the reflection direction of the laser beams (light flux) emitted from the screen 15 to change the position at which the virtual image 45 is displayed according to the positions of the eyes of the observer (driver) 3.

The free-form surface mirror 30, which is an example of an imaging optical system, reflects the diverging light to project the projection light PL in order to form a virtual image with the light diverging through the screen 15. Due to this configuration, the free-form surface mirror 30 is designed using, for example, a commercially available optical design simulation software, such that the free-form surface mirror 30 has a certain level of light-gathering power to achieve a desired image-forming position of the virtual image 45. In the display device 100, the light-gathering power of the free-form surface mirror 30 is designed such that the virtual image 45 is displayed at a position away from the location of the eyepoint of the observer 3 in the depth direction by, for example, at least 1 m and equal to or shorter than 30 m (preferably, equal to or shorter than 10 m).

The image forming optical system is satisfactory as long as it includes at least one light-concentrating element that has a light-concentrating function. Such a light-concentrating element that has a light-concentrating function is not limited to a free-form surface mirror like the free-form surface mirror 30, and may be, for example, a concave mirror, a curved-surface mirror, and a Fresnel reflector element. For example, such a light-concentrating element is formed by performing sputtering or vapor deposition on a thin metal film such as of aluminum (Al) and silver (Ag) with high reflectivity. Due to such a configuration, the utilization efficiency of the light incident on a light-concentrating element as the projection light PL can be maximized, and a virtual image with high brightness can be obtained.

The projection light PL that is reflected by the free-form surface mirror 30 is projected outside the display device 100 from a slit formed on the housing 90, and is incident on the windshield 50. As illustrated in FIG. 1, a hole H is formed on the housing 90 by a hole surrounding area 901. The hole surrounding area 901 is a part of the housing 90 around the hole H. The position and size of the hole H is determined depending on the size of the hole surrounding area 901 and the position at which the hole surrounding area 901 is arranged. In order to prevent a foreign substance from entering the housing 90 through the hole H, a dustproof window 40 is arranged so as to close the hole H. In particular, it is desired that the dustproof window 40 be made of a material through which the projection light PL can pass through.

The windshield 50 is an example of a reflector and serves as a transmissive reflector that transmits some of the laser beams (bundle of laser beams) and reflects at least some of the remaining laser beams (partial reflection). The windshield 50 may serve as a semitransparent mirror through which the observer 3 visually recognizes the virtual image 45 and the scenery ahead of the mobile object (vehicle). The virtual image 45 is an image to be displayed that is visually recognized by the observer 3, including vehicle-related information (e.g., speed and travel distance), navigation information (e.g., route guidance and traffic information), and warning information (e.g., collision warning). The transmissive reflector may be a front windshield or the like that is provided independently from the windshield 50.

The virtual image 45 may be displayed so as to be superimposed on the scenery ahead of the windshield 50. The windshield 50 is not flat but is curved. For this reason, the position at which the virtual image 45 is formed is determined by the curved surface of the free-form surface mirror 30 and the windshield 50. In some embodiments, the windshield 50 may be a semitransparent mirror (combiner) that serves as a separate transmissive reflector having a partial reflection function.

The plane of the free-form surface mirror 30 is designed and shaped so as to reduce the optical distortion that occurs on the windshield 50. The light beams that are incident on the free-form surface mirror 30 are reflected by the free-form surface mirror 30 according to the shape of the plane of the free-form surface mirror 30. The reflected bundles of laser beams (light flux) are then incident on the windshield 50, and reach at least one eyepoint within an eye-lip area including at least the eye-lip center (i.e., the reference eyepoint). The bundles of laser beams that are incident on the windshield 50 are reflected according to the shape of the surface of the windshield 50.

Due to such a configuration as above, the laser beams (light flux) that are emitted from the screen 15 are projected towards the free-form surface mirror 30. The projection light that is concentrated by the free-form surface mirror 30 passes through the hole H of the housing 90 and is projected towards the windshield 50, and is reflected by the windshield 50. Accordingly, the observer 3 can visually recognize the virtual image 45, i.e., the magnified image of the intermediate image formed on the screen 15, due to the light reflected by the windshield 50.

A method of projecting an image using the display device 100 may be implemented by a panel system or a laser scanning system. In the panel system, an intermediate image is formed by an imaging device such as a liquid crystal panel, a digital micromirror device (DMD) panel (digital mirror device panel), or a vacuum fluorescent display (VFD). In the laser scanning system, an intermediate image is formed by scanning the laser beams emitted from the light-source device 11, using an optical scanner.

The display device 100 according to an embodiment of the present disclosure adopts the laser scanning system. In particular, in the laser scanning system, since emitting/non-emitting can be assigned to each pixel, in general, a high-contrast image can be formed. In some alternative embodiments, the panel system may be adopted as the projection system in the display device 100.

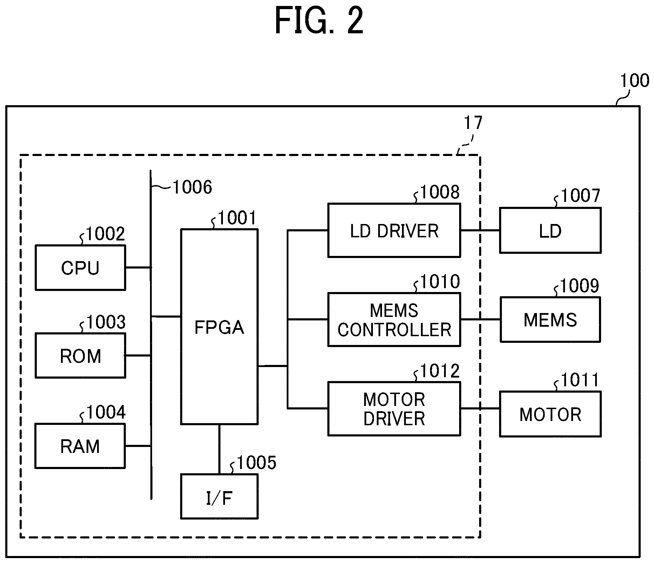

FIG. 2 is a block diagram of a hardware configuration of a display device according to an embodiment of the present disclosure. The hardware configuration illustrated in FIG. 2 may be adopted in common among the embodiments of the present disclosure. Alternatively, some components or elements may be added to or deleted from the hardware configuration of FIG. 2.

The display device 100 includes a controller 17 that controls the operation of the display device 100. For example, the controller 17 is a circuit board or integrated circuit (IC) chip mounted inside the display device 100. The controller 17 includes a field-programmable gate array (FPGA) 1001, a central processing unit (CPU) 1002, a read only memory (ROM) 1003, a random access memory (RAM) 1004, an interface (I/F) 1005, a data bus line 1006, a laser diode (LD) driver 1008, a micro-electromechanical systems (MEMS) controller 1010, and a motor driver 1012. The controller 17 is an example of a control unit.

The FPGA 1001 is an integrated circuit whose setting can be changed by a designer of the display device 100. The LD driver 1008, the MEMS controller 1010, and the motor driver 1012 generate a drive signal according to the control signal output from the FPGA 1001. The CPU 1002 is an integrated circuit that controls the entirety of the display device 100. The ROM 1003 is a storage device that stores a computer executable program for controlling the CPU 1002. The RAM 1004 is a storage device that serves as a work area of the CPU 1002.

The I/F 1005 is an interface for communication with an external device. For example, the I/F 1005 is coupled to the controller area network (CAN) of a vehicle. Moreover, the I/F 1005 is coupled to, for example, the extraneous light sensor 20. The extraneous light sensor 20 sends the sensing data (i.e., the intensity of the extraneous light) to the controller 17 through the I/F 1005. Note also that the sensor that is coupled to the I/F 1005 is not limited to the extraneous light sensor 20, and other various kinds of sensors for acquiring the internal and external information of the vehicle may be coupled to the I/F 1005.

The LD driver 1008 is a circuit that generates a drive signal for driving the light-source device 11. For example, the LD driver 1008 generates a drive signal for a semiconductor light-emitting element LD that configures a part of the light-source device 11. The MEMS controller 1010 is a circuit that generates a drive signal for driving the light deflector 13. For example, the MEMS controller 1010 generates a drive signal for driving the MEMS that is a device for moving a scanning mirror that configures a part of the light deflector 13. The motor driver 1012 is a circuit that generates a drive signal for driving various kinds of motors. For example, the motor driver 1012 generates a drive signal for driving the motor 1011 that rotates the rotation axis 301 of the free-form surface mirror 30.

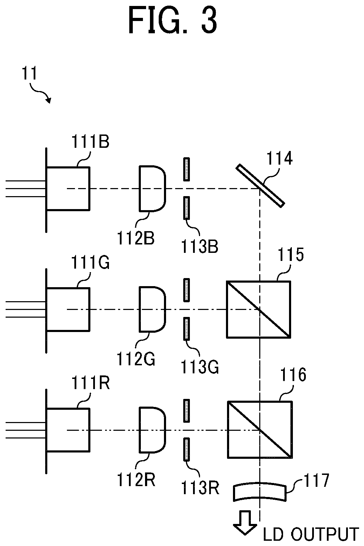

FIG. 3 is an illustration of an example of a specific configuration of a light-source device according to an embodiment of the present disclosure. The light-source device 11 includes light-source elements 111R, 111G, and 111B (these light-source elements may be referred to simply as a light-source element 111 in the following description when it is not necessary to distinguish each of the light-source elements), coupling lenses (collimators) 112R, 112G, and 112B, apertures 113R, 113G, and 113B, combiners 114, 115, and 116, an optical branching element 117, a lens, and a photosensor.

The light-source elements 111R, 111G, and 111B for three colors (R, G, B) are, for example, laser diodes (LDs) each having a single emission point or multiple emission points. Each of the light-source elements 111R, 111G, and 111B emits laser beams whose light intensity depends on the amount of changes in the drive current that is supplied to each of the light-source elements. The light-source elements 111R, 111G, and 111B emit bundles of laser beams (light flux) having different wavelengths λR, λG, and λB, respectively. For example, λR=640 nanometers (nm), λG=530 nm, and λB=445 nm.

The emitted bundles of laser beams (light flux) are coupled by the coupling lenses 112R, 112G, and 112B, respectively. The coupled bundles of laser beams (light flux) are shaped by the apertures 113R, 113G, and 113B, respectively. The shape of the apertures 113R, 113G, and 113B may be various kinds of shape such as a circle, an ellipse, a rectangle, and a square depending on, for example, certain predetermined conditions such as the divergence angle of the bundles of laser beams (light flux).

The laser beams (light flux) that are shaped by the apertures 113R, 113G, and 113B are combined by the three combiners 114, 115, and 116, respectively. The combiners 114, 115, and 116 are plate-like or prismatic dichroic mirrors, and reflect or transmit the laser beams (light flux) therethrough according to the wavelength of the laser beams to combine the laser beams into one bundle of laser beams (light flux) that travels along one optical path. Then, the combined light flux enters the optical branching element 117.

Some of the light that has entered the optical branching element 117 passes through the optical branching element 117, and different some of the light that has entered the optical branching element 117 is reflected by the optical branching element 117. In other words, the combined laser beams (light flux) are branched into transmitted light and reflected light by the optical branching element 117.

The transmitted light passes through the lens, and the light deflector 13 is irradiated with the transmitted light. As a result, the transmitted light is used to draw an image or display a virtual image on the screen 15. In other words, the transmitted light is used as light for projecting an image.

On the other hand, the photosensor in the light-source device 11 is irradiated with the reflected light. The photosensor in the light-source device 11 outputs an electrical signal according to the light intensity of the received laser beams. For example, the output electrical signal is output to the FPGA 1001, and may be used to control the display system 1. As described above, according to the present embodiment, the reflected light is used as monitoring light that adjusts the intensity of the laser beams or monitoring light that adjusts the color or brightness of the resultant virtual image.

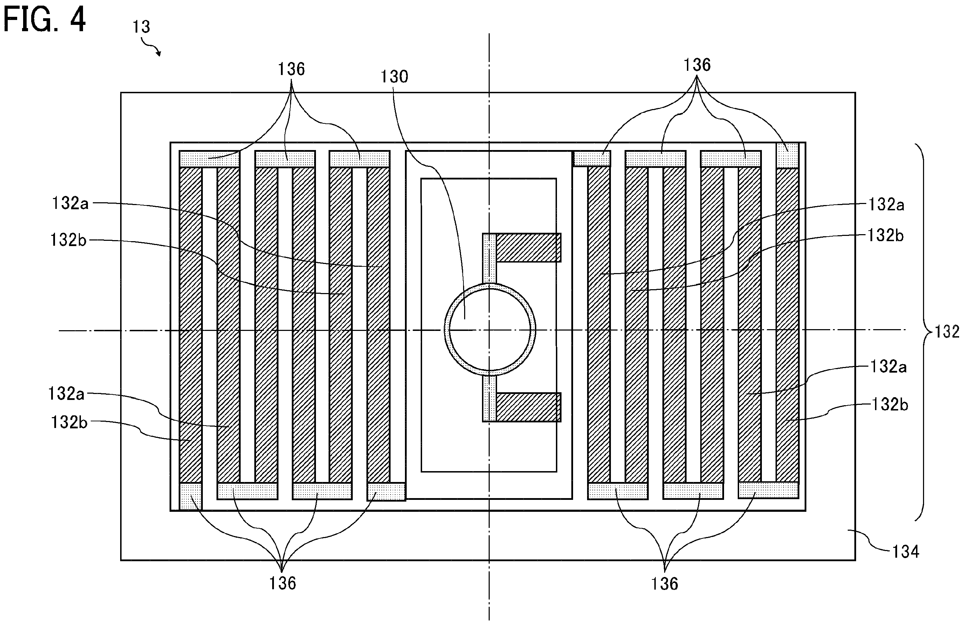

FIG. 4 is an illustration of a specific configuration of a light deflector according to an embodiment of the present disclosure. The light deflector 13 is a MEMS mirror that is manufactured through a semiconductor process, and includes a mirror 130, a serpentine beam 132, a frame 134, and a piezoelectric member 136.

The mirror 130 has a reflecting surface plane that reflects the laser beams emitted from the light-source device 11 towards the screen 15 side. In the light deflector 13, a pair of serpentine beams 132 are formed across the mirror 130. The serpentine beams 132 have a plurality of turning portions. Each of these turning portions is configured by a first beam 132a and a second beam 132b that are arranged alternately. Each of the pair of serpentine beams 132 is supported by the frame 134. The piezoelectric member 136 is disposed such that the first beam 132a and the second beam 132b, which are adjacent to each other, are coupled to each other. The piezoelectric member 136 applies different levels of voltage to the first beam 132a and the second beam 132b to bend each of the first beam 132a and the second beam 132b differently.

As a result, the first beam 132a and the second beam 132b, which are adjacent to each other, bend in different directions. As the bending force is accumulated, the mirror 130 rotates in the vertical direction around the horizontal axis. With such a configuration as above, the light deflector 13 can perform optical scanning in the vertical direction at a low voltage. An optical scanning in the horizontal direction around the axis in the vertical direction is implemented by the resonance produced by a torsion bar or the like coupled to the mirror 130.

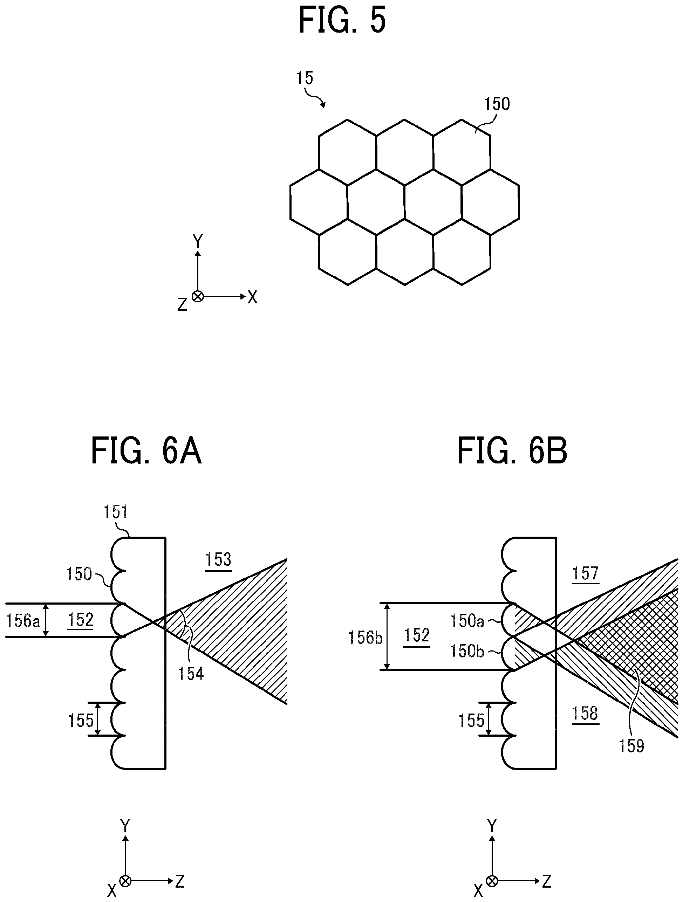

FIG. 5 is an illustration of an example of a specific configuration of a screen according to an embodiment of the present disclosure. The screen 15 forms an image of the laser light emitted from the LD 1007 that forms a part of the light-source device 11. The screen 15 serves as a divergent part that diverges the laser beams at a predetermined divergence angle. The screen 15 as illustrated in FIG. 5 has a microlens-array structure in which a plurality of hexagonal-shaped microlenses 150 are arranged with no gap therebetween. For example, the width of each of the microlenses 150 (the distance between two sides that face each other) is optimized to a ranged from 50 micrometers (µm) to 300 µm. In the present embodiment, the width of each of the microlenses 150 is approximately 200 µm. As the microlenses 150 of the screen 15 have a hexagonal shape, the multiple microlenses 150 can be arrayed with high density.

Note that the shape of each microlens 150 is not limited to the hexagon shape. Thus, alternatively, in some embodiments, each microlens 150 has, for example, a rectangular shape, or a triangle shape. In the present embodiment, structure in which the multiple microlenses 150 are arrayed in a regularized manner is described. However, no limitation is intended thereby, and the arrangement of the microlenses 150 is not limited to this structure. For example, the centers of the multiple microlenses 150 may be decentered from each other, and the microlenses 150 may be arranged in an irregular manner. When adopting such an eccentric arrangement, each microlens 150 has a different shape.

Alternatively, the height of the vertex in the optical-axis direction may be changed. When the decentering in the direction in which microlenses are arrayed or the shifting in the optical-axis direction is determined on a random basis, for example, the speckles that are caused by the interference of the laser beams that have passed through the boundary between each pair of neighboring microlenses and the moire that is caused by the cyclic array can be reduced.

The laser beams that have reached the screen 15 scan the inside of the microlenses 150, and multiple dots are marked as the laser beams are switched on and off during the scanning. For example, the levels of gradation can be expressed by a combination of on-off control of light. Alternatively, the levels of gradation may be expressed by adjusting the radiation intensity of the laser beams.

FIGs. 6A and 6B are illustrations for describing a difference in operation due to differences in sizes of the diameter of incident light flux and the lens diameter in a microlens array. As illustrated in FIG. 6A, the screen 15 is configured by an optical plate 151 in which the multiple microlenses 150 are neatly arranged. When an incident light 152 is scanned on the optical plate 151, the incident light 152 diverges as passing through the microlenses 150, and the incident light 152 becomes a diverging light 153. Due to the structure of the microlenses 150 of the screen 15, the incident light 152 can diverge at a desired divergence angle 154. The intervals 155 at which the microlenses 150 are arranged is designed to be wider than the diameter 156a of the incident light 152. Accordingly, the screen 15 does not cause interference among the lenses, and does not cause speckles (speckle noise).

FIG. 6B is a diagram illustrating the optical paths of diverging lights when the diameter 156b of the incident light 152 is twice wider than the intervals 155 at which the microlenses 150 are arranged. The incident light 152 is incident on two microlenses 150a and 150b, and these two microlenses 150a and 150b produce two diverging light beams 157 and 158, respectively. At this time, the two divergent light beams are present in an area 159, and hence interference between the divergent light beams may occur. Such an interference between two diverging light beams (coherent light) is visually recognized as a speckle by an observer.

In view of the above circumstances, the intervals 155 at which the microlenses 150 are arranged is designed to be wider than the diameter 156 of the incident light 152 in order to reduce the speckles. A configuration with convex lenses is described above with reference to FIGs. 6A and 6B. However, no limitation is indicated thereby, and advantageous effects can be expected in a similar manner in a configuration with concave lenses.

As described above with reference to FIG. 5, FIG. 6A, and FIG. 6B, the screen 15 that is an example of an image forming unit serves as a divergent part through which the scanned laser beams diverge at a predetermined divergence angle. Due to this functionality, the driver (observer 3) can recognize an image in the range of the eye box. Thus, even when the driver (observer 3) who is seated on the driver's seat changes the positions of his/her eyes to some extent, his/her visually-recognizable range can be secured.

As described above, it is desired that the shape of each one of the microlenses 150 has a certain level of precision such that the light appropriately diverges through the screen 15 provided with the microlenses 150. Further, preferably, the screen 15 can be mass-produced. For this reason, for example, the screen 15 is molded by resin material. A concrete example of resin that satisfies the reflection property or optical property required for the microlenses 150 may include methacrylic resin, polyolefin resin, polycarbonate, and cyclic polyolefin resin. However, no limitation is intended thereby.

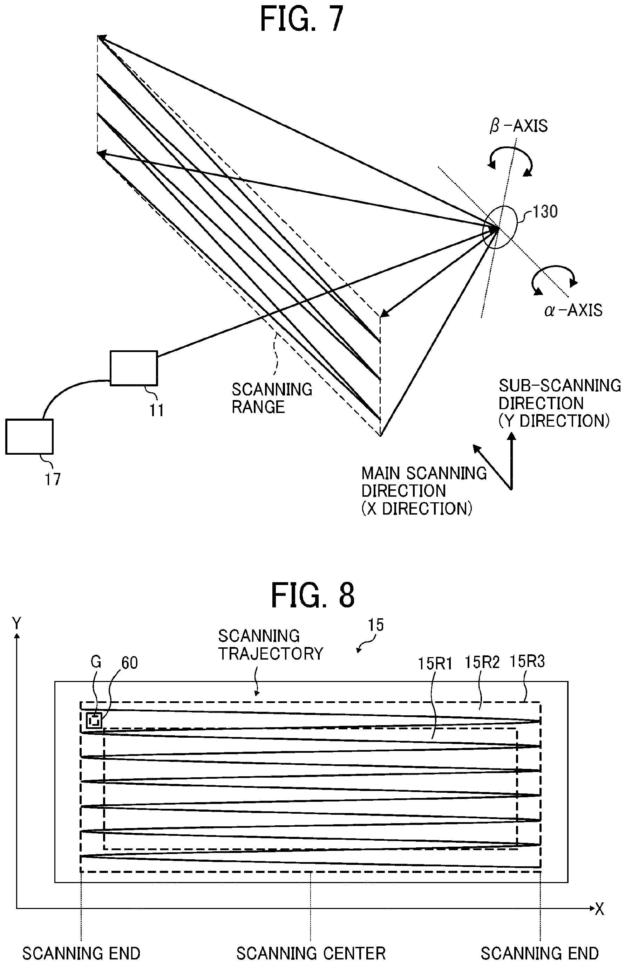

FIG. 7 is an illustration for describing the relation of a mirror and a scanning range of the light deflector 13. The FPGA 1001 of the controller 17 controls the light-emission intensity of laser beams from the light-source elements, the timing of light emission of the light-source elements (the timing of turning on the light-source device 11), and the light waveform of the laser beams from the multiple light-source elements in the light-source device 11. The LD driver 1008 drives the multiple light-source elements of the light-source device 11 to emit laser beams. As illustrated in FIG. 7, the laser beams that are emitted from the multiple light-source elements and whose optical paths are combined are two-dimensionally deflected about the α axis and the β axis by the mirror 130 of the light deflector 13, and the screen 15 is irradiated with the laser beams deflected by the mirror 130, which serve as scanning beams. In other words, the screen 15 is two-dimensionally scanned by main scanning and sub-scanning by the light deflector 13.

As described with reference to FIG. 1, in the present embodiment, the mirror 14 is provided on the optical path between the light deflector 13 and the screen 15. That is, the scanning light from the light deflector 13 two-dimensionally scans the mirror 14 and the reflected light from the mirror 14 scans the two-dimensionally on the screen 15 as the scanning light.

In the present embodiment, the entire area to be scanned by the light deflector 13 may be referred to as a scanning range. The scanning beams scan (two-way scans) the scanning range of the screen 15 in an oscillating manner in the main scanning direction (X-axis direction, an example of the first scanning direction) at a high frequency of about 20,000 to 40,000 hertz (Hz) while one-way scanning the scanning range of the screen 15 in the sub-scanning direction (Y-axis direction, an example of the second scanning direction) by a predetermined amount. The scanning in the sub-scanning direction is performed at a frequency of about a few tens of Hz, which is lower than the frequency in the main scanning direction. That is, the light deflector 13 performs raster scan on the screen 15. In this configuration, the display device 100 controls the light emission of the multiple light-source elements according to the scanning position (the position of the scanning beam). Accordingly, an image can be drawn on a pixel-by-pixel basis and a virtual image can be displayed.

As described above, a two-dimensional scanning area is formed on the plane including the surface of the screen 15 every time raster scanning is performed one time. In other words, a two-dimensional scanning area is formed on the plane including the surface of the screen 15 for every sub-scanning cycle that is a predetermined cycle. The scanning area that is formed every time raster scanning is performed one time may be referred to as a scanning frame. As described above, the sub-scanning frequency is about a few tens of hertz (Hz). Accordingly, the length of time it takes for a scanning area to be formed on the screen 15 every sub-scanning cycle, i.e., the length of time to scan one scanning frame (one cycle of two-dimensional scanning), is a few tens of millisecond (msec). For example, assuming that the main-scanning cycle and the sub-scanning cycle are 20,000 Hz and 50 Hz, respectively, the length of time to scan one frame in one cycle of two-dimensional scanning is 20 msec with reference to the sub-scanning frequency.

FIG. 8 is an illustration of an example of a trajectory of a scanning line when two-dimensional scanning is performed, according to an embodiment of the present disclosure. As illustrated in FIG. 8, the screen 15 includes an image displaying area 15R1 and a non-image area 15R2. The image displaying area 15R1 is an area on which an image (intermediate image) is formed as the light-source device 11 is turned on according to the image data and the area is irradiated with the modulated light. The non-image area 15R2 is a frame-shaped area that surrounds the image displaying area 15R1.

The scanning area 15R3 is a combined range of the image displaying area 15R1 and the non-image area 15R2 on the screen 15. The light deflector 13 scans the scanning area 15R3 with irradiation light. In FIG. 8, the track of the scanning in the scanning range and a plurality of main scanning lines, which is a linear track of scanning in the main scanning direction, are drawn in the sub-scanning direction, and form a zigzag line. For the sake of explanatory convenience, the number of main-scanning lines in FIG. 8 is less than the actual number of main-scanning lines. In FIG. 8, the track of the scanning is a zigzag line where the ends of the main scanning lines are contiguous to each other. However, no limitation is intended therein. In other words, the main scanning lines may be parallel to each other, and the ends of the main scanning lines may be not continuous. The main scanning lines may be formed by the two-way scanning as illustrated in FIG. 8, or may be formed by repeated one-way scanning.

Further, the screen 15 includes a detection image area G that includes a light receiver at an area surrounding the image displaying area 15R1 (a part of the non-image area 15R2) in the scanning range. In FIG. 8, the detection image area G is disposed on the -X and +Y side of the image displaying area 15R1. More specifically, the detection image area G is disposed at a corner on the +Y side. When the light deflector 13 scans the detection image area G, the light-source device 11 is turned on. The photosensor 60 is disposed at a position where the scanning light incident on the detection area within the detection image area G is detected when the light deflector 13 scans the detection image area G. When the scanning light is detected by the photosensor 60, the photosensor 60 outputs a light signal to the FPGA 1001. The photosensor 60 has a light receiver, such as a photodiode, and is fixed and disposed on a part of the screen 15 or a part of the unit housing 12, for example. The FPGA 1001 detects the operation of the light deflector 13 based on the timing at which the signal is received. Accordingly, the start timing of scanning or the end timing of scanning can be determined.

In other words, the track of scanning line where a plurality of main scanning lines are drawn in the sub-scanning direction, which is linear track of scanning in the main scanning direction, is formed in the scanning range. In the image displaying area 15R1 of the scanning range, a display image to be presented to a user is formed by the track of scanning line where a plurality of main scanning lines, which are linear track of scanning in the main scanning direction, are drawn in the sub-scanning direction. For example, the display image is a still image (frame) that makes up the input moving images (video data). In the following description, the area within the image displaying area 15R1 in a scanning frame may be referred to as a scanning-frame image.

All the cycles in which a scanning frame and a scanning-frame image are formed corresponds to the sub-scanning cycle. A scanning-frame image is sequentially formed based on the image data for every sub-scanning cycle, and the virtual image 45 is drawn. Due to such a configuration, the observer 3 who observes the virtual image 45 that is sequentially displayed can visually recognize the virtual image 45 as moving images.

As described above, the screen 15 is configured by a transmissive optical element such as the microlens array that diffuses light. However, no limitation is intended therein. In some embodiments, the screen 15 may be a reflective element such as a micromirror array that diffuses light, depending on the design or layout of the display device 100. Alternatively, in some embodiments, the screen 15 may be a flat plate or curved plate that does not diffuse light.

In the embodiments of the present disclosure as described above, the formation of the scanning area 15R3 is described on condition that the scanning light that is emitted from the light deflector 13 scans the plane that includes a surface of the screen 15. However, no limitation is intended therein. For example, when a mirror 14 is disposed on the optical path between the light deflector 13 and the screen 15, the scanning area 15R3 is formed on the mirror 14. Further, when another type of reflecting mirror is disposed on the optical path between the light deflector 13 and the screen 15, the scanning area 15R3 is formed also on the reflecting mirror or the plane that is scanned by the scanning light reflected by the reflecting mirror.

At least, the image displaying area 15R1 is formed on the screen 15 in the end, but it is not necessary for all the scanning area 15R3 to reach the plane that includes the surface of the screen 15. For example, the detection image area G may be designed to be detected by the photosensor 60 provided before reaching the plane including the screen 15. Alternatively, the optical path may be changed before reaching the plane including the screen 15, and the detection image area G is detected by the photosensor 60 disposed in the changed optical path.

The shape of the screen 15 and the shape of the image displaying area 15R1 are not limited to the shape as illustrated in FIG. 8. The image displaying area 15R1 does not need to be a flat rectangular shape as illustrated in FIG. 8. The image displaying area 15R1 may have a curved surface. Alternatively, the image displaying area 15R1 may have a rectangular or polygonal shape different from the rectangular shape of the screen 15.

For example, the shape of the image displaying area 15R1 may be determined by the shape of a portion (i.e., a holder or the like) of the unit housing 12 that holds the screen 15. In other words, when the screen 15 is held by the unit housing 12 or a holder of the screen 15, which is a part of the unit housing 12, so as to cover the non-image area 15R2, the light incident on the held portion is blocked by the unit housing 12 and the free-form surface mirror 30 is not irradiated with the light. Accordingly, the free-form surface mirror 30 is irradiated with the diverging light from the intermediate image of the image displaying area 15R1. As described above, the virtual image 45 of a desired shape is formed by determining the shape of the image displaying area 15R1.

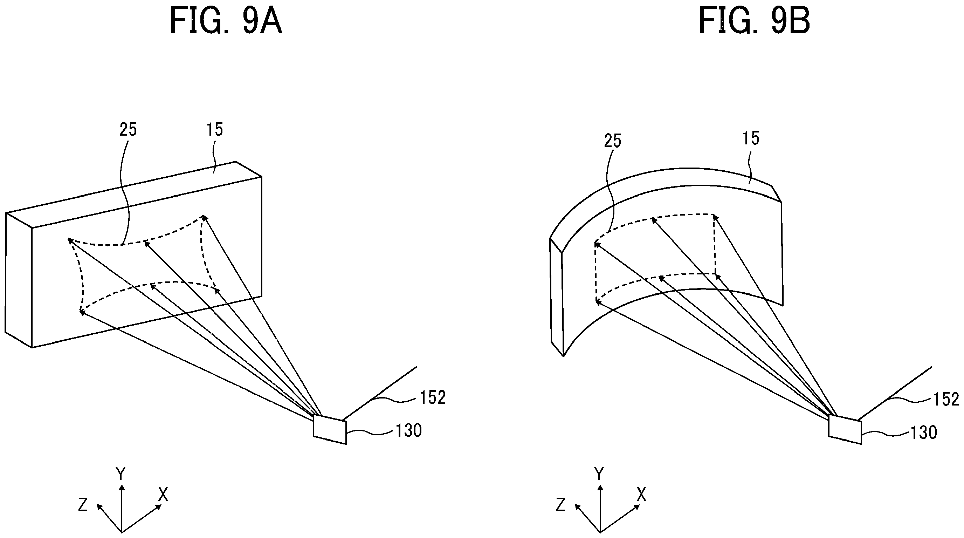

FIGs. 9A and 9B are illustrations for describing the shapes of the screen 15. The following describes the effect of the difference in the distance between the arrival positions of the light deflector 13 and the screen 15 due to the shape of the screen 15 on the image, with reference to FIGs. 9A and 9B.

FIG. 9A is an illustration of the case in which the screen 15 is flat. FIG. 9B is an illustration of the case in which the screen 15 is curved. More specifically, the screen 15 in FIG. 9B has a concave surface facing the mirror 130.

In the case of the flat-screen in FIG. 9A, the intermediate image 25 is distorted due to the difference in the distance between the arrival positions of the light deflector 13 and the screen 15. In addition, the beam spot diameter varies depending on the arrival position. When such light beams are formed as the virtual image 45 through the observation optical system constituted by the free-form surface mirror 30, the windshield 50, and the like, the image quality might decrease. An optical element for correcting such distortion of images and variation in spot diameter might be disposed between the light deflector 13 and the screen 15, but this leads to an increase in HUD size and cost.

By contrast, curving the screen 15 as illustrated in FIG. 9B can reduce the difference in the above-described distance. Accordingly, the distortion of the intermediate image 25 and the variation of the beam spot diameter can be reduced as compared with the case of the flat screen. Thus, the image quality of the virtual image 45 can be improved without increasing the size of the HUD or increasing the cost.

As described with reference to FIG. 1, in the present embodiment, the mirror 14 is provided on the optical path between the light deflector 13 and the screen 15. That is, the scanning light from the light deflector 13 two-dimensionally scans the mirror 14 and the reflected light from the mirror 14 scans the two-dimensionally on the screen 15 as the scanning light.

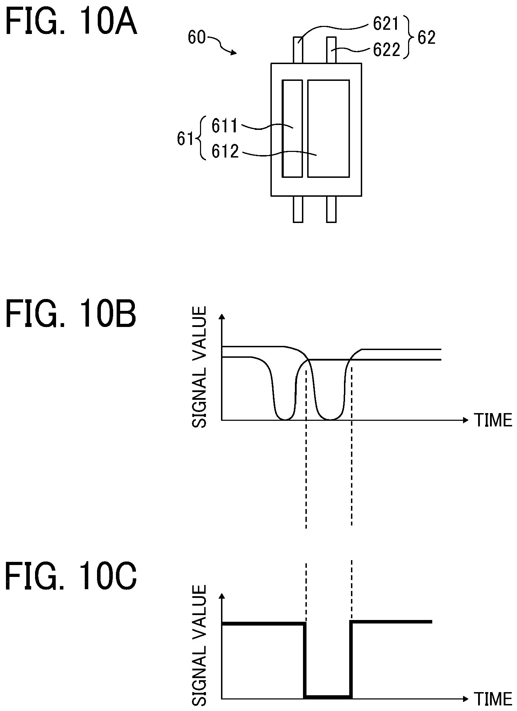

The configuration of the photosensor 60 will be described with reference to FIGs. 10A, 10B, and 10C. As described above, the photosensor 60 includes a light receiver 61 (an example of a photosensor and an example of a detection area) and a signal line 62. The light receiver 61 is, for example, a photodiode that converts an optical signal into an electric signal. When the laser beam scans the light receiving surface of the light receiver 61, a pulse signal waveform is obtained. A detection area in which the light receiver 61 detects the irradiation light (the light emitted from the light-source device) is equal to an area of the light receiver 61, and such a detection area may be smaller than the area of the light receiver 61.

FIG. 10A is an illustration of the configuration of the photosensor 60. As described above, the photosensor 60 includes the light receiver 61 and the signal line 62. The light receiver 61 is, for example, a photodiode that converts an optical signal into an electric signal. The light receiver 61 has two divided surfaces to receive light, which are light-receiving surfaces 611 and 612. The light-receiving surface 611 has a smaller width in the main scanning direction than the light-receiving surface 612 does. The signal line 62 has a signal line 621 for outputting a signal from the light-receiving surface 611 and a signal line 622 for outputting a signal from the light-receiving surface 612.

FIG. 10B is a graph of a signal output when a scanning laser beam moves in a direction from the light-receiving surface 611 to the light-receiving surface 612. More specifically, FIG. 10B indicates two types of signals output from the signal lines 621 and 622 when the scanning of a laser beam is performed in a direction from the light-receiving surface 611 to the light-receiving surface 612 having a larger width in the scanning direction. As illustrated in FIG. 10B, when the scanning of the laser beam is performed, a pulse signal is output that has a width corresponding to the time it takes for the laser beam to pass through a corresponding one of the light-receiving surfaces. Using the pulse signal, the timing at which light has passed through the light-receiving surface can be detected.

FIG. 10C is an illustration of a pulse signal waveform obtained based on the intersecting timing of the two signals in FIG. 10B. More specifically, a signal as illustrated in FIG. 10C is output based on the intersecting timing so as to obtain a pulse signal waveform when the photodiode is scanned with a laser beam.

If the absolute value of an output signal value of the pulse signal changes with a variation in the intensity of light incident on a photodiode, the timings at which the light beam passes through the light-receiving surface of the light receiver might be detected to be shifted from each other even if the light receiver is scanned at the same timing. In view of such a situation, when the intensity of light incident on the light receiver significantly changes, the intersecting timing of the two signals as illustrated in FIG. 10C is used to achieve high-accuracy detection.

In the above-described embodiment, the case in which the photosensor provided with two divided light-receiving surfaces is used is described. However, no limitation is intended thereby. In some examples, the light-receiving surface of the photosensor may not be divided. In this case, as illustrated in FIG. 10B, the time point at which the output signal value exceeds a predetermined threshold value is detected as the timing at which light has passed through the light-receiving surface of the light receiver.

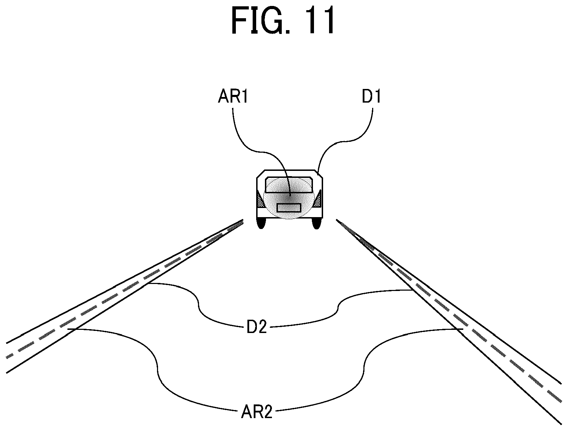

The following describes an example in which the two-dimensional scanning device described above is mounted on a vehicle. FIG. 11 is an example of a displayed image when the display device 100 is mounted on a vehicle as a HUD. A typical example case where the display device 100 is used is to display navigation information such as the speed, mileage, and destination of a vehicle in the field of view of the observer 3. In recent years, for the purpose of enhancing driving safety, there has been a demand for the HUD to superimpose a display image over a real object, that is, provide the AR superimposition.

For example, as illustrated in FIG. 11, the display AR1 or AR2 such as a highlighted display is AR superimposed on the vehicle D1 and the boundary line D2, which are objects to be recognized by the observer 3 during the driving, by the HUD. This induces the visual recognition of the observer 3. For example, when such an AR superimposition is provided, it is more desired that an image be displayed at a proper position with a larger image size in the future. However, during the formation of an image by the two-dimensional scanning of the light deflector 13, an image size and an image-forming position might fluctuate with the environmental temperature or over time, and thus a desired image cannot be obtained.

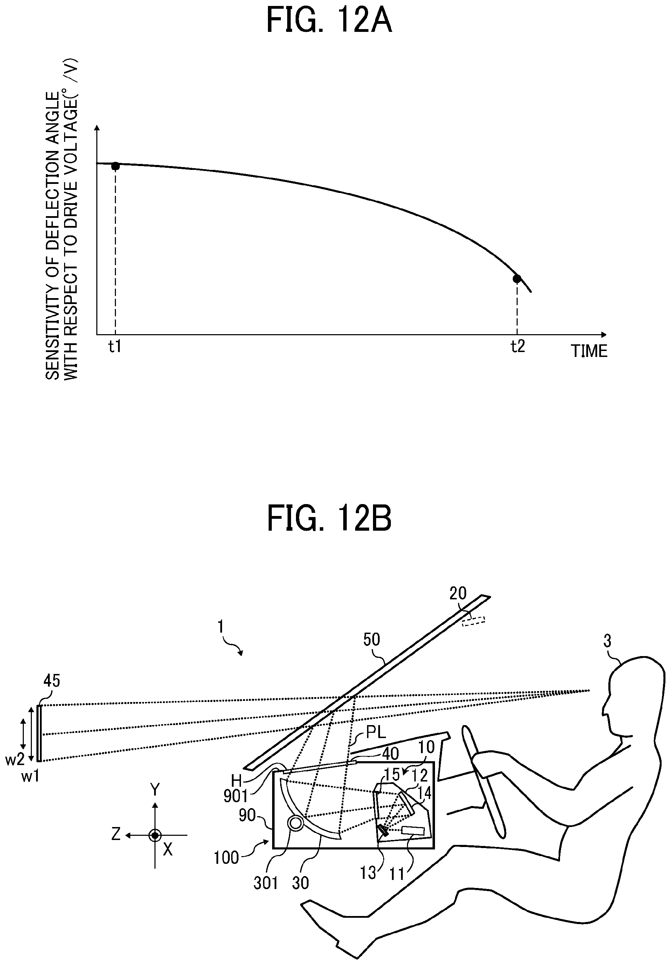

FIGs. 12A and 12B are illustrations of an example of the change in the sensitivity of the mirror 130 with respect to the drive voltage over time.

When an MEMS mirror is used as the mirror 130 as an example, the deflection angle of the mirror 130 with respect to the drive voltage for driving the MEMS mirror (deflection angle sensitivity with respect to the drive voltage of the MEMS mirror) changes with the environmental temperature and over time.

In other words, as illustrated in FIG. 12A, when the drive voltage for driving the MEMS mirror is constant, the deflection angle sensitivity of the mirror 130 decreases with time t2 with respect to the initial state t1. Accordingly, the size w2 of the virtual image 45 at time t2 is smaller than the size w1 of the virtual image 45 at the initial state t1 as illustrated in FIG. 12B. In the present embodiment, the case where the image size in the sub-scanning direction changes is described. However, no limitation is intended therein. The image size in the main scanning direction may change as well.

When the fixed state of each light source in the light-source device 11 and the light deflector 13 fluctuates within the two-dimensional scanning plane with the environmental temperature and over time, the image forming position of the intermediate image 25 formed on the screen 15 varies, and the image forming position of the virtual image 45 that is visually recognized by the observer 3 in the end varies. Further, when the image forming positions of the red, blue, and green colors independently vary, the images drawn in the respective colors are spatially misaligned, so that the colored images are visually recognized.

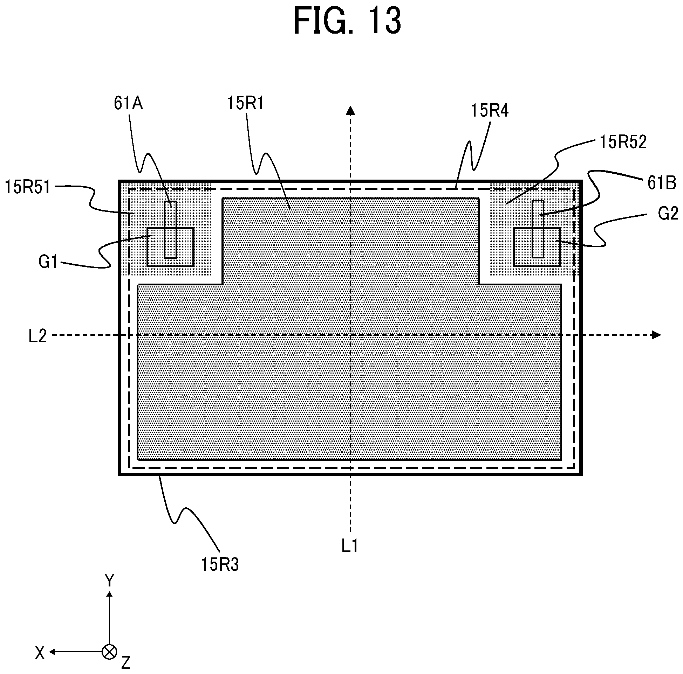

FIG. 13 is an illustration of the configuration of a correcting process according to an embodiment. FIG. 13 illustrates an image displaying area 15R1, non-image areas 15R51 and 15R52, the two-dimensional scanning area 15R3, an area 15R4 that is optically effective on the screen 15, the first and second light receivers 61A and 61B (an example of first and second photosensors and an example of first and second detection areas), the first detection image area G1, and the second detection image area G2. The symbol "L1" denotes the center of the main scanning amplitude of the two-dimensional scanning on the screen 15 by the light deflector 13, and the symbol "L2" denotes the center of the sub-scanning amplitude of the two-dimensional scanning on the screen 15 by the light deflector 13. The first and second detection areas in which the first and second light receivers 61A and 61B detect the irradiation light are equal to the areas of the first and second light receivers 61A and 61B, respectively, and such detection areas may be smaller than the areas of the first and second light receivers 61A and 61B, respectively.

As illustrated in FIG. 13, the two-dimensional scanning area (the scanning area) 15R3 is extended to the outside of the image displaying area 15R1, and the first and second light receivers 61A and 61B are disposed in the non-image areas 15R51 and 15R52, which are scanning ranges outside the image displaying area 15R1. The first and second light receivers 61A and 61B are separated from each other in the main scanning direction.

The non-image areas 15R51 and 15R52 do not overlap with the image displaying area 15R1, but are arranged so as to overlap with the image displaying area 15R1 along the main scanning direction and the sub-scanning direction. Such an arrangement increases the image displaying area 15R1 as much as possible.

The first detection image area G1 is provided as a certain area that includes the lower end of the first light receiver 61A in the sub-scanning direction and is to be irradiated with a laser beam (scanning light beam), and the second detection image area G2 is provided as a certain area that includes the lower end of the second light receiver 61B in the sub-scanning direction and is to be irradiated with a laser beam (scanning light beam).

The first and second light receivers 61A and 61B are arranged at the same position in the sub-scanning direction, and the detection image areas G1 and G2 are also arranged at the same position in the sub-scanning direction.

Each of the first and second detection image areas G1 and G2 has a wider width in the main scanning direction than the width of each of the first and second light receivers 61A and 61B in the main scanning direction. The laser beam scanning within the detection image area G passes through the light-receiving surface of the light receiver 61 in the main scanning direction, and thus the light receiver 61 detects the scanning timing of the scanning light beam.

As the area on the light receiver 61 is irradiated with a laser beam, a light signal relating to the scanning state is obtained from the light receiver 61. Using such a signal regarding the scanning state, the controller 17 controls the driving of the light deflector 13 and the light-emission timing of the light-source device 11 so as to adjust the image forming position and the image size. The signal relating to the scanning state is, for example, a time interval to pass through the light receiver 61 or the number of scanning lines that has passed through the light receiver 61.

At this time, it is desirable that the image displaying area 15R1 be apart from the first and the second detection image areas G1 and G2 by a predetermined interval. This arrangement prevents the image displaying area 15R1 from being erroneously irradiated with the scanning light (instead of the first detection image area G1 and/or the second detection image area G2 being irradiated with the scanning light) at the timing of scanning the first detection image area G1 and/or the second detection area G2, due to the timing lag. Further, it is also desirable that the size of the image displaying area 15R1 be smaller than or equal to the size of an optical effective area 15R4 of the screen 15. When there is no need to distinguish the first detection image area G1 and the second detection image area G2, the first detection image area G1 and the second detection image area G2 are sometimes collectively referred to as the detection image area G.

Note that the detection image (an image to be used for detection) formed in the detection image area G may be changed according to what is to be controlled. Further, the detection image may be formed at a predetermined scanning frame interval, or may be formed when a specific condition is satisfied. Further, the detection image may be formed with all of the light sources turned on, or with a specific light source turned on. Alternatively, any light source may be selected to be turned on for each scanning frame.

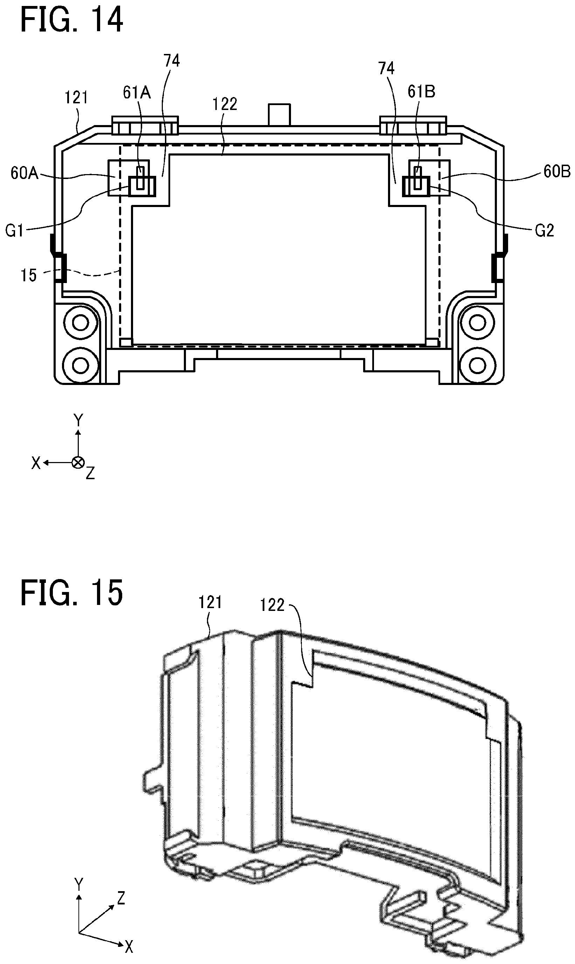

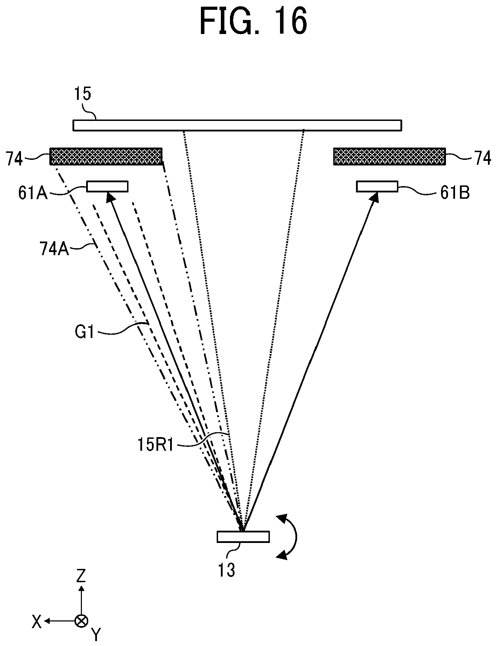

FIG. 14 is a front view of a holder of the screen according to an embodiment of the present disclosure. FIG. 15 is a perspective view of the holder in FIG. 14. FIG. 16 is an illustration of an optical path in the configuration of FIG. 14.

The holder 121 holds the screen 15 indicated by a dotted line. The photosensors 60A and 60B are provided on the holder 121. The photosensors 60A and 60B include first and second light receivers 61A and 61B, and the first and second light receivers 61A and 61B are provided at positions where the detection image areas G1 and G2 receive light, respectively. The first and second light receivers 61A and 61B and the detection image areas G1 and G2 are arranged so as to overlap the screen 15 in the direction of the optical axis. In FIG. 14, scanning light is emitted through an opening 122 in a direction from the front side to the rear side of the drawing sheet in which FIG. 14 is drawn. Thus, the shape of the image displaying area 15R1 is determined according to, for example, the shape of the opening 122.

The holder 121 includes a shield 74 disposed upstream from the screen 15 in the optical path. The holder 121 and the shield 74 formed as a single integrated unit. The shield 74 is an example of a shielding area that blocks a part of the scanning light deflected by the light deflector 13. The opening 122 that transmits the scanning light is formed by the inner edge of the shield 74.

The shape of the shield 74 is determined so as to prevent the scanning light on the detection image areas G1 and G2 from being incident on the optically effective area of the screen 15. Further, a black coating is applied to the shield 74 so as to absorb or reflect light. This prevents the scanning light from passing through the detection image areas G1 and G2. In FIG. 16, irradiation light 74A, which is casted on the detection image area G1, is blocked off by the shield 74.

In other words, the shield 74 is disposed to block the irradiation light being deflected by the light deflector 13 and shed on an area between the image displaying area 15R1 and each of the first detection area (the first light receiver 61A) and the second detection area (the second light receiver 61B). This configuration prevents the irradiation light being deflected by the light deflector 13 and shed on the area between the image displaying area 15R1 and each of the first detection area and the second detection area, from straying into (entering) the image displaying area 15R1, serving as stray light. As a result, a decrease in the image quality can be prevented.

Further, the shield 74 is disposed downstream from the first detection area (the first light receiver 61A) and the second detection area (the second light receiver 61B) along the optical path of the light from the light-source device 11. The shield 74 covers regions at which the first and second detection areas are located. This arrangement prevents the irradiation light deflected by the light deflector 13 to scan the first detection area and the second detection area, from straying into the image displaying area 15R1. Thus, a decrease in the image quality can be prevented.

The shield 74 is disposed upstream from the screen 15 along the optical path of the light from the light-source device 11 and covers a part of the screen 15. This arrangement prevents the irradiation light deflected by the light deflector 13 to scan an area between the image displaying area 15R1 and the detection area, from straying into the image displaying area 15R1 and the screen 15.

The shield 74 and the holder 121 may not be formed as a single integrated unit. Further, the shield 74 may be disposed at any desired position downstream from the light deflector 13 along the optical path of the light from the light-source device 11.

Further, instead of providing the shield 74 in the screen 15, the screen 15 may be configured to have a shielding area at an area between the image displaying area 15R1 and each of the first detection area (the first light receiver 61A) and the second detection area (the second light receiver 61B), where the light deflected by the light deflector 13 is incident. Such a shielding area is configured to prevent reflection and transmission of the light that has been deflected by the light deflector 13 and incident on the area between the image displaying area 15R1 and each of the first detection area and the second detection area.

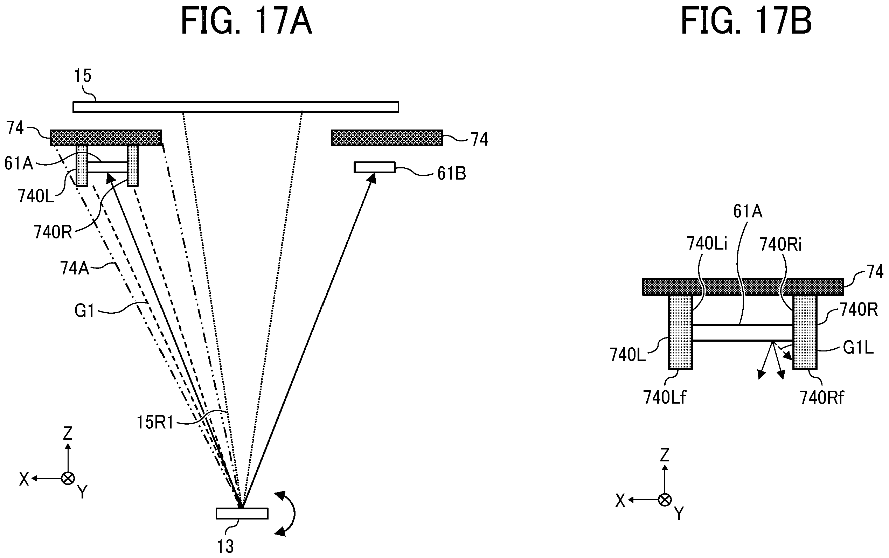

FIGs. 17A and 17B are illustration of an optical path in the configuration according to a first modification of the holder in FIG. 14. As illustrated in FIG. 17A, the shield 74 includes a left wall 740L and a right wall 740R, which are extending upstream from the shield 74 along the optical path of the light from the light-source device 11. The left wall 740L is disposed on one side of the first light receiver 61A, and the right wall 740R is disposed on the other side of the first light receiver 61A along the X-direction in FIG. 17A. Same as in the first light receiver 61A, the right wall may be disposed on one side of the second light receiver 61B, and the left wall may be disposed on the other side of the second light receiver 61B.

As illustrated in FIG. 17B, the left wall 740L and the right wall 740R have an end face 740Lf and an end face 740Rf, respectively, which are disposed upstream from the lower surface of the first light receiver 61A in the Z-direction, along the optical path of the light from the light-source device 11. In FIG. 17B, the reflected light G1L reflected by the lower surface of the first light receiver 61A is blocked off or shielded by the inner wall 740Ri of the right wall 740R. This configuration prevents the reflected light G1L reflected by the lower surface of the first light receiver 61A from straying (becoming stray light) into the screen 15 or the image displaying area 15R1. The inner wall 740Ri is an example of a region that is located upstream from the detection area (the light receiver 61) along the optical path of the light from the light-source device 11 and that blocks off or shields the light G1L reflected by the detection area.

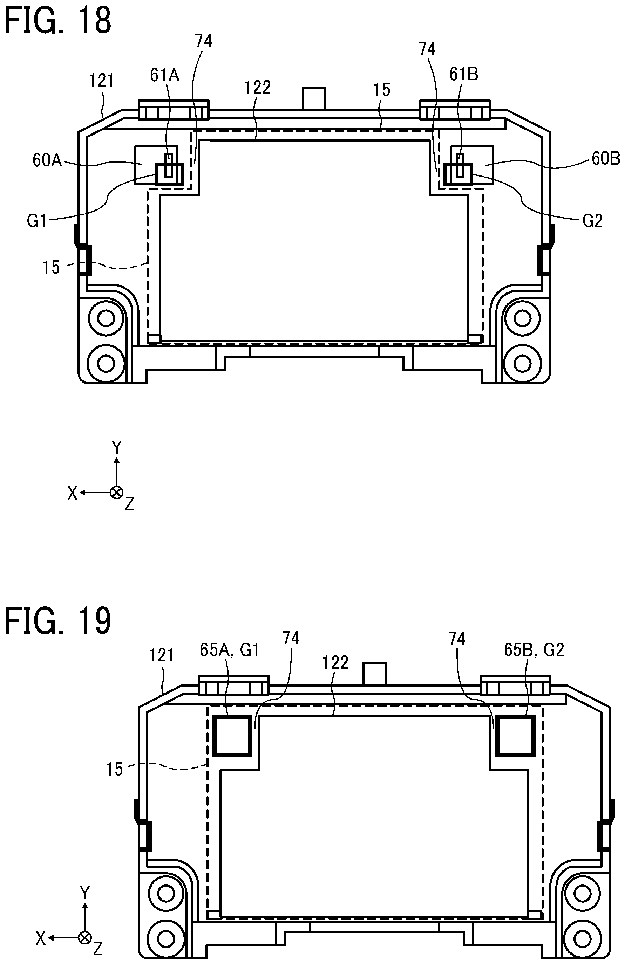

FIG. 18 is an illustration of a holder according to a second modification of the holder in FIG. 14.

In the present modification, the screen 15 has a shape that overlaps the first and second light receivers 61A and 61B (first and second detection areas) and the detection image areas G1 and G2 in the first scanning direction (the X-axis direction) and the second scanning direction (the Y-axis direction). Further, the shape of the screen 15 does not overlap the first and second light receivers 61A and 61B (the first and second detection areas) and the detection image areas G1 and G2 in the direction of the optical axis.

In other words, the first and second light revivers 61A and 61B (the first and second detection areas) and the detection image areas G1 and G2 do not overlap the optically effective area of the screen 15 in the direction of the optical axis.

Such a configuration prevents the irradiation light deflected by the light deflector 13 to scan the first and second detection areas (the first and second light receivers 61A and 61B) and the light irradiation light deflected by the light deflector 13 between the image displaying area 15R1 and each of the first and second detection areas, from straying into the image displaying area 15R1 as stray light even without the shield 74. The arrangement of the shield 74 in the screen 15 reliably prevents such stray light from straying into the image displaying area 15R1.

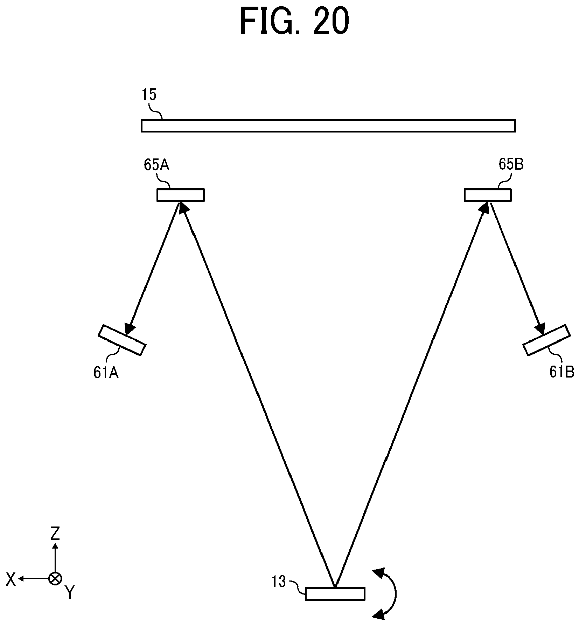

FIG. 19 is an illustration of a holder according to a third modification of the holder in FIG. 14. FIG. 20 is an illustration of an optical path in the configuration of FIG. 19.

The holder 121 includes a first mirror 65A and a second mirror 65B at positions where the detection image areas G1 and G2 receive light beams, respectively. The first receiver 61A and the second light receiver 61B are disposed at positions to receive light beams reflected by the first mirror 65A and the second mirror 65B, respectively.

In other words, the first light receiver 61A and the second light receiver 61B are spatially separate from the screen 15. This arrangement prevents the irradiation light deflected by the light deflector 13 to scan the first mirror 65A and the second mirror 65B from straying into the image displaying area 15R1 as stray light. As a result, a decrease in image quality can be substantially prevented.

In the second modification, the first mirror 65A and the second mirror 65B correspond to the first detection area and the second detection area. The shield 74 is disposed so as to block off the irradiation light deflected by the light deflector 13 and shed on the area between the image displaying area 15R1 and each of the first detection area and the second detection area (the first mirror 65A and the second mirror 65B). Further, the shield 74 is disposed downstream from the first detection area and the second detection area along the optical path of light from the light-source device 11 and covers the regions where the first detection area and the second detection area are located.

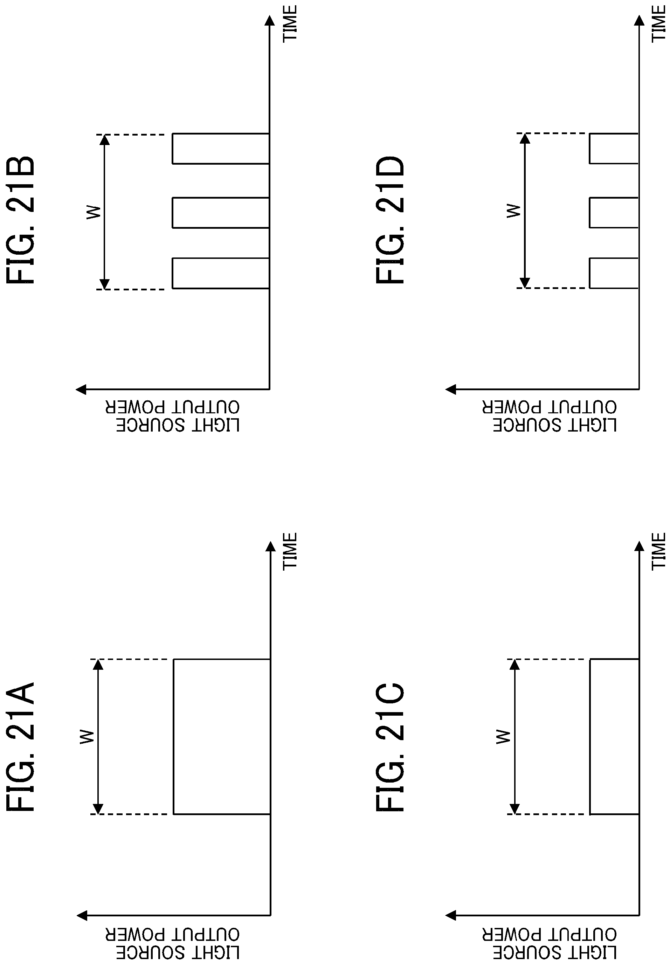

This configuration prevents the irradiation light deflected by the light deflector 13 to scan the first detection area and the second detection area and the irradiation light deflected by the light deflector 13 to scan the area between the image displaying area 15R1 and each of the first detection area and the second detection area, from straying into the image displaying area 15R1 as stray light. Thus, a decrease in the image quality can be substantially prevented. FIGs. 21A, 21B, 21C, and 21D are illustrations for describing the output power of a light source (the light-source device 11).

FIG. 21A indicates the continuous-wave (CW) operation conditions for causing the light-source device 11 to continuously emit light during time width W based on image data to be displayed. FIG. 21B indicates the operation conditions for alternately turning on and off the light-source device 11 in a temporal manner during time width W based on image data to be displayed. The operation conditions in FIG. 2B enables a decrease in the brightness of an image as compared to the operation conditions in FIG. 21A.

FIGs. 21C and 21D indicate cases in which the light-emission intensity of the light-source device 11 is lower than in the cases of FIGs. 21A and 21B.

By employing these operation conditions for the light-source device 11 differently, the dynamic range of the brightness of the displayed image can be expanded.

In the present embodiment, a plurality of operation conditions as indicated in FIGs. 21A, 21B, 21C, and 21D are applied differently depending on a desired brightness of an image to be displayed and the image data when the light-source device 11 is turned on based on the image data and the light deflector 13 forms an image within the image displaying area 15R1. For the average light-emission intensity, FIG. 21A, FIG. 21B, FIG. 21C, and FIG. 21D are arranged in descending order.

The CW operation conditions are applied as illustrated in FIGs. 21A and 21C when the light-source device 11 is caused to emit light and the light deflector 13 sheds the light emitted from the light-source device 11 on the detection area (the light receiver 61). Further, in accordance with the irradiation intensity suitable for the detection area (the light receiver 61), the light-source device 11 is caused to emit light whose irradiation intensity is made lower than the irradiation intensity of light emitted from the light-source device 11 based on the image data when the light deflector 13 scans the image displaying area 15R1.

In other words, the operation conditions for the light-source device 11 differ between when the light-source device 11 is caused to emit light based on image data and the light deflector 13 forms an image within the image displaying area 15R1 and when the light-source device 11 is caused to emit light and the light deflector 13 sheds the light on the detection area. With this configuration, an accurate image control can be performed regardless of the difference in the operation conditions for the light source when forming an image. Further, the dynamic range of the brightness of the display image can be expanded regardless of the characteristics of the detection area.

Further, by lowering the irradiation intensity of a laser beam casted on the detection area as compared to the image displaying area 15R1, when the laser beam (the irradiation light) casted on the detection area strays into the image displaying area 15R1, such a laser beam that has strayed into the image displaying area 15R1 is difficult to recognize. As a result, a decrease in the image quality can be substantially prevented.

The brightness suitable for the displayed image is variable with the use environment of the display device 100, and significantly differs between daytime and nighttime. More specifically, the range of the average intensity of light that has been emitted from the light-source device 11 based on image data and deflected by the light deflector 13 to form an image within the image displaying area 15R1 is made larger than the range of intensity of light to be adjusted according to the irradiation intensity suitable for the detection area (the light receiver 61) when the detection area is irradiated with the light that has been emitted from the light-source device 11 and deflected by the light deflector 13. In this case, the range of the average intensity of light includes the range of the average maximum light intensity and the range of the average minimum light intensity. With this configuration, a displayed image that is easy for a user to visually recognize can be provided. In addition, the light shed on the detection area is prevented from straying into the image displaying area 15R1. Thus, a decrease in the image quality can be substantially prevented.

The above-described difference in the operation conditions for the light-source device 11 is only one example, between when the light deflector 13 forms an image within the image displaying area 15R1 with light emitted from the light-source device 11 based on image data and when the light deflector 13 sheds light emitted from the light-source device 11 on the detection area. In some examples, the pulse-emission mode of the light-source device 11 as illustrated in FIGs. 21B and 21D may be applied when the light deflector 13 sheds light emitted from the light-source device 11 on the detection area, and the CW mode as illustrated in FIGs. 21A and 21C may be applied when the light deflector 13 forms an image within the image displaying area 15R1 with light emitted from the light-source device 11 based on image data. Alternatively, the CW mode as illustrated in FIGs. 21A and 21C may be used in common while the output power of the light-source device 11 differs between when the light deflector 13 forms an image within the image displaying area 15R1 with light emitted from the light-source device 11 based on image data and when the light deflector 13 sheds light emitted from the light-source device 11 on the detection area.

For the time interval between when the light deflector 13 forms an image within the image displaying area 15R1 with light emitted from the light-source device 11 based on image data and when the light deflector 13 sheds light emitted from the light-source device 11 on the detection area, it is desired that the length of time needed to prepare the next operation conditions be set as the time interval. By setting such a time interval, desired operation conditions can be achieved.

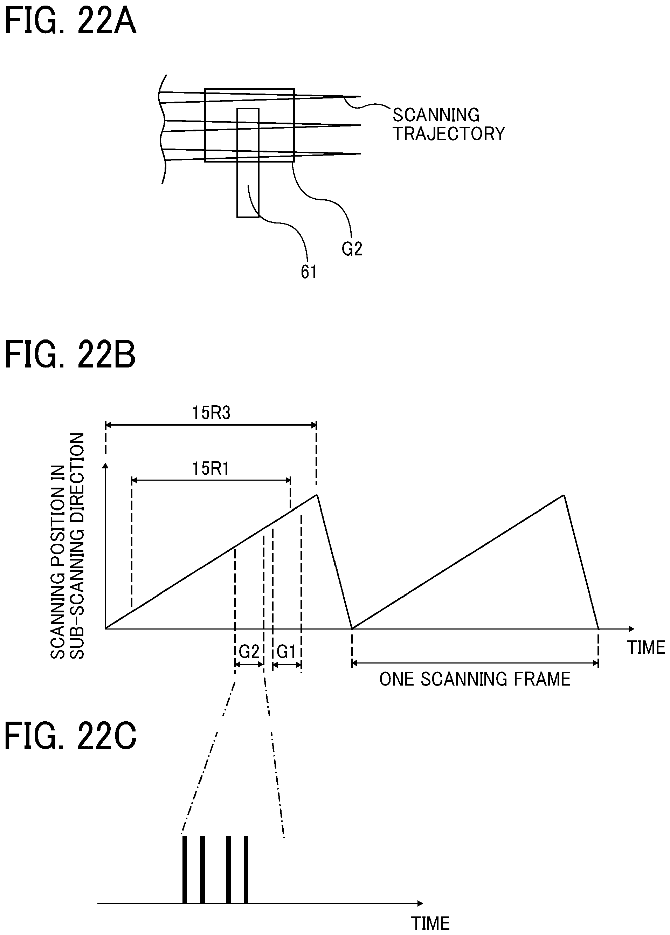

FIGs. 22A, 22B, and 22C are illustrations for describing the detection of scanning positions.

FIG. 22A is an illustration of raster scan being performed on the light receiver 61. FIG. 22B is an illustration for describing the changes in the scanning position in the sub-scanning direction over time during the two-dimensionally scanning. FIG. 22C is an illustration of light signals obtained from the light receiver 61 through the second detection image area G2.

As illustrated in FIG. 22A, the raster scan is performed on the light receiver 61, and light signals are obtained as illustrated in FIG. 22C every time the scanning light passes through the light receiver 61. Accordingly, by counting the number of light signals obtained during the length of time to scan the detection image area G, the number of scanning lines that has passed through the light receiver 61 is counted. Adjustment of an image in the sub-scanning direction is performed based on the number of scanning lines detected from the irradiation areas of the first and second detection image areas G1 and G2.

Since the timing at which a laser beam passes through the light receiver 61 can be detected, the size and position of an image in the main scanning direction are controlled or adjusted, and the drive parameter of the two-dimensional deflection element involved in the drive in the main scanning direction is controlled.

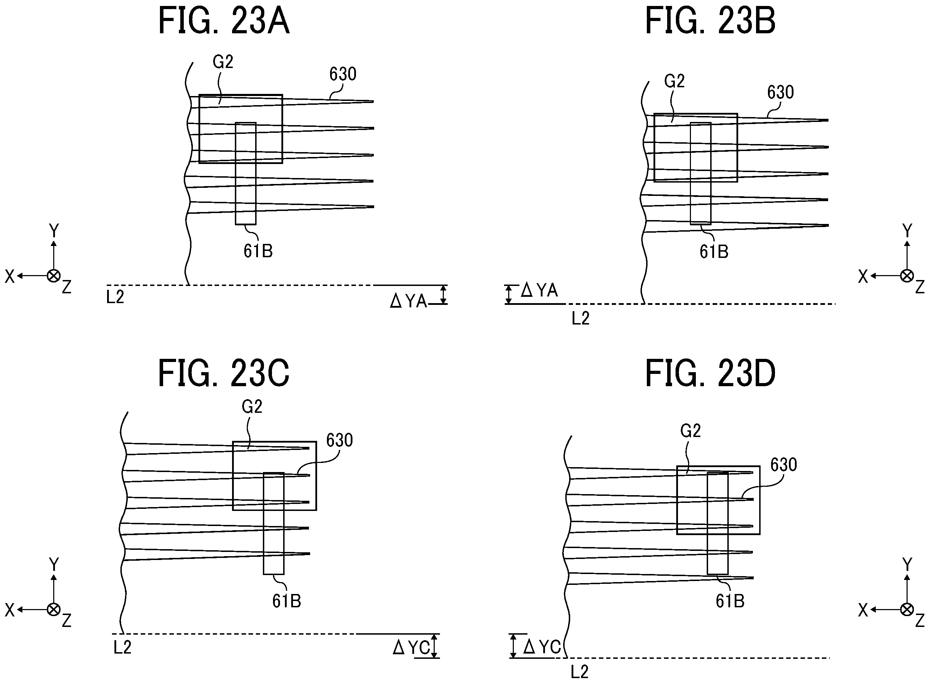

FIGs. 23A, 23B, and 23C are illustrations for describing the resolution for detecting scanning positions.

In FIG. 23A, the detection image area G2 and the second light receiver 61B are located at a predetermined position in the main scanning direction (hereinafter, referred also as a main-scanning position). In this case, the number of scanning lines 630 received by the second light receiver 61B, which is the number of the scanning lines received within the overlapping regions of the second light receiver 61B and the detection image area G2, is four.

FIG. 23B indicates the case in which the position of an image changes in -Y direction from the state in FIG. 23A. In this state in FIG. 23B, the number of scanning lines 630 received by the second light receiver 61B is five.

When the scanning state is detected based on the number of scanning lines 630 received by the second light receiver 61B, the misalignment of an image cannot be detected until the state is changed from FIG. 23A to FIG. 23B. The amount of misalignment of an image, which is detected from the state in FIG. 23B, is ΔYA in FIG. 23B.

FIG. 23C indicates the case in which the detection image area G2 and the second light receiver 61B are located at the scanning end side in the main scanning direction. In this state, the number of scanning lines 630 received the second light receiver 61B is four.

FIG. 23D indicates the case in which the position of an image changes in -Y direction from the state in FIG. 23C. In this state in FIG. 23D, the number of scanning lines 630 received by the second light receiver 61B is five, and the amount of misalignment of an image, which is detected from the state in FIG. 23C, is ΔYC in FIG. 23D.

When comparing the amount of misalignment ΔYA with ΔYC, ΔYC is larger than ΔYA. In other words, it can be found that the detection resolution becomes worse and the image quality deteriorates more as the detection image area G2 and the second light receiver 61B are located closer to the scanning end side in the main scanning direction.

This is because the difference in density between the scanning lines 630 in the sub-scanning direction increases in a direction to the scanning end side along the main scanning direction. The detection resolution of the image size is based on the same concept as that of the position of an image. The detection resolution becomes worse and the image quality deteriorates more as the detection image area G and the light receiver 61 are located closer to the scanning end side in the main scanning direction.

For this reason, it is desired that the light receiver 61 be disposed apart from the scanning end in the main scanning direction by a certain distance. Further, the intensity of stray light might increase as the detection image area G increases. Accordingly, it becomes easier for the user to visually recognize the stray light. For this reason, it is desired that the detection image area G include a part of the light receiver 61 and that the detection image area G be apart from the scanning end in the main scanning direction. With such a configuration, an image can be displayed with a higher visibility, and the image displaying area 15R1 can be expanded.

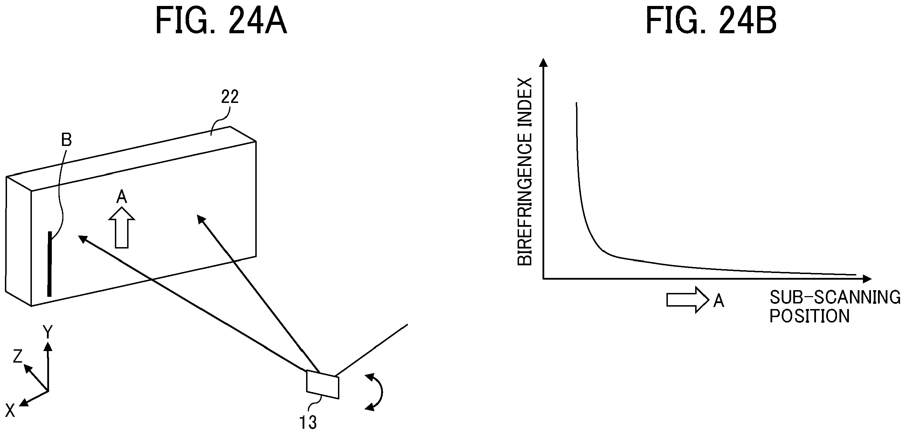

FIGs. 24A and 24B are illustrations for describing the direction in which resin is injected to form the screen.

In FIG. 24A, resin is injected in the direction indicated by arrow A to form the screen 15.

FIG. 24B indicates the relation of the sub-scanning position and the birefringence index in the cross section at the position B indicated in FIG. 23A.

As illustrated in FIG. 24B, on the upstream side in the direction in which the resin is injected, internal strain occurs according to the resin flow characteristics, and as a result, birefringence is likely to occur as the optical performance of the screen 15. Also, birefringence is likely to occur at the four corners of the resin molded product.

A light beam that has passed through a part of the screen 15 where the birefringence performance is poor fails to have a well polarized state as compared to the other part of the screen 15. As a result, the reflective properties of the free-form surface mirror 30 and the windshield 50, which are disposed at a stage subsequent to the screen 15, might change. This causes a decrease in the luminance of an image and a poor color adjustment.

The birefringence causes such a decrease in image quality, but has a relatively low effect on the detection of the status of the scanning.

In view of the above, in the present embodiment, more image displaying areas 15R1 are located downstream in the direction in which resin is injected and at an area other than four corners of the molded product. The detection areas are located upstream in the direction in which resin is injected and at the four corners.

In other words, the detection areas are located at an area whose refringence is larger than the image displaying area 15R1. This arrangement prevents a decrease in the image quality due to the large degree of the refringence and also increases the image displaying area 15R1.

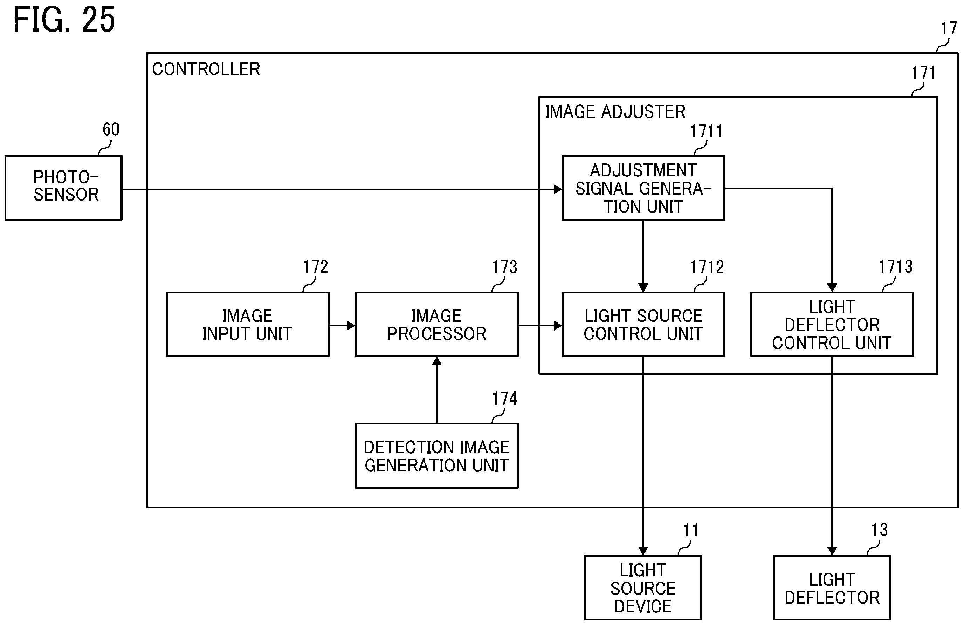

FIG. 25 is a block diagram of a functional configuration of a controller according to an embodiment of the present disclosure. The controller 17 as a control unit includes an image adjuster 171, an image input unit 172, an image processor 173, and a detection image generation unit 174. For example, each functional configuration of the controller 17 is implemented by some of the elements illustrated in FIG. 2. In particular, the controller 17 may be implemented by the processing performed by the CPU 1002, the ROM 1003, the FPGA 1001, the LD driver 1008, the MEMS controller 1010, and the motor driver 1012, as well as a computer executable program stored in the ROM 1003.

The image adjuster 171 calculates a misalignment of a position for forming an image and a change in the size of an image from the initial state, based on a signal output from the light receiver 61.

When the amount of misalignment of the position for forming an image is greater than or equal to a predetermined value (amount), the adjustment signal generation unit 1711 outputs, to the light source control unit 1712, a signal for adjusting the light-emission timing of the light-source device 11 so as to adjust the position for forming an image.

Further, when the amount of change in the size of an image is greater than or equal to a predetermined value (amount), the adjustment signal generation unit 1711 outputs, to the light deflector control unit 1713, a signal for adjusting a deflection angle of the light deflector 13 so as to adjust the size of an image.

In response to receiving the signal from the adjustment signal generation unit 1711, the light source control unit 1712 controls the driving of the light-source device 11 based on the drive signal. In response to receiving the signal from the adjustment signal generation unit 1711, the light deflector control unit 1713 periodically controls the driving of the light deflector 13 based on the drive signal.

The image input unit 172 outputs image data for forming an image to the image processor 173. The image input unit 172 outputs image data for forming a display image that is to be displayed for the user, to the image processor 173. When the display device 100 is provided for a vehicle as a HUD, an image to be presented to a user includes, for example, the vehicle-related information (e.g., speed and travel distance) and external information (for example, position information from the global positioning system (GPS), routing information from a navigation system, or traffic information) of the vehicle received from an external network. However, no limitation is intended thereby, and an image to be presented to a user may be, for example, an image based on an image regenerative signal read from the television (TV), the Internet, or a recording medium.

The image processor 173 generates driving data for the light-source device 11 such as the timing at which laser beams are to be emitted from the light-source device 11 and light-emission intensity (power of light emission) of the light-source device 11, based on the generated image data. The generated driving data is output to the light source control unit 1712. Then, the image processor 173 generates driving data for the light-source device 11 such as the timing at which laser beams are to be emitted and light-emission intensity (power of light emission), based on the image data for forming an image to be presented to the user. The generated driving data is output to the light source control unit 1712.

When the image data output from the image input unit 172 is, for example, moving-image data, the image processor 173 generates driving data for forming a scanning frame image based on each of the frames constituting the moving image, that is, each image corresponding to one screen included in the moving image, so as to sequentially display virtual images 45. For example, one frame of the moving images may be displayed using the scanning-frame images in two continuous cycles of two-dimensional scanning.

The light source control unit 1712 controls the light emission (irradiation control) of the light-source device 11 based on the driving data and the signal for adjustment from the adjustment signal generation unit 1711.

The detection image generation unit 174 outputs the image data of a detection image to be received by the light receiver 61 to the image processor 173.

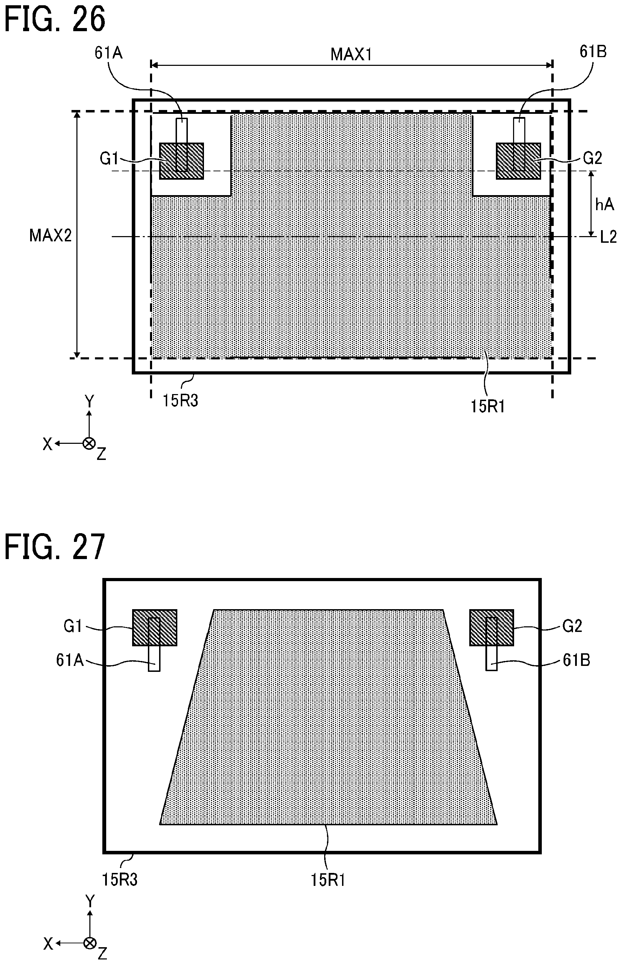

FIG. 26 is an illustration for describing a layout of the configuration in FIG. 13.

When the first and second light receivers 61A and 61B (first and second detection areas) and the first and second detection image areas G1 and G2 are located outside the image displaying area 15R1, the ratio of the image displaying area 15R1 with respect to the two-dimensional scanning area 15R3 decreases. Accordingly, particularly when the MEMS mirror whose maximum scanning area is restricted due to the mechanical constraints is used as the light deflector 13, it becomes difficult to increase the size of an image.

In view of such circumstances, in the present embodiment, at least a part of the first light receiver 61A and second light receiver 61B (the first detection area and the second detection area) and the first detection image area G1 and the second detection image area G2 are located within a region indicated by dotted lines in FIG. 26, formed by a maximum width MAX1 in the main scanning direction and a maximum width MAX2 in the sub-scanning direction of the image displaying area 15R1.

In other words, the first light receiver 61A and the second light receivers 61B (the first detection area and the second detection area) and the first detection image area G1 and the second detection image area G2 overlap the image displaying area 15R1 in the first scanning direction and the second scanning direction. With this configuration, the area occupied only by the light receiver 61 (detection area) and the detection image area G within the scanning area 15R3 can be reduced. Thus, the ratio of the image displaying area 15R1 with respect to the scanning area 15R3 can be increased.

In the present embodiment, the width of the image displaying area 15R1 in the main scanning direction changes in the sub-scanning direction. Specifically, the width of the image displaying area 15R1 in the main scanning direction at the position of the first and second detection image areas G1 and G2 in the sub-scanning direction is narrower than the width of the image displaying area 15R1 in the main scanning direction at the position where the first and second detection image areas G1 and G2 are not located in the sub-scanning direction. By appropriately setting the position of an image to be displayed in the sub-scanning direction within the image displaying area 15R1 according to the type of information and the conditions of the road outside the vehicle, an effective image area can be expanded based on information desired to be displayed.

FIG. 27 is an illustration for describing the configuration of the correcting process according to a modification of the embodiment in FIG. 13. As illustrated in FIG. 11, a display target to be AR superimposed on the driving lane of the driver's vehicle becomes closer to the center of an image in the main scanning direction as it becomes closer to the upper part of the image, in view of a sense of perspective. In view of this, the image displaying area 15R1 is provided based on the display target, and the first detection image area G1 and the second detection image area G2 are provided at areas where there is less need to display an image. Accordingly, the image displaying area can be expanded based on the sense of perspective.

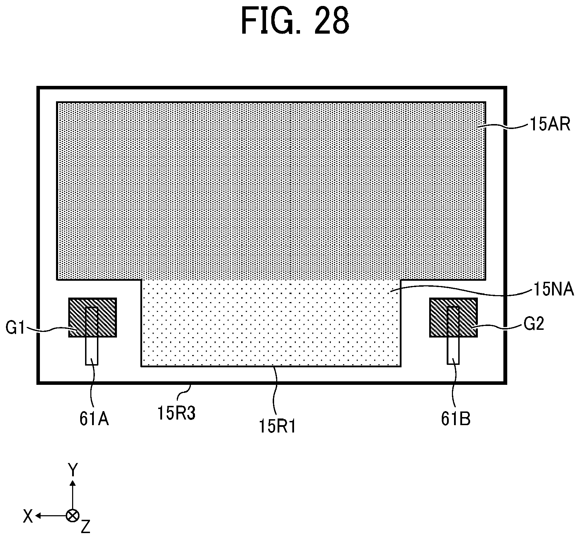

FIG. 28 is an illustration for describing a configuration of the correcting process according to a second modification of the embodiment in FIG. 13.

The image displaying area 15R1 includes an AR superimposition area 15AR and a navigation information display area 15NA, and has a narrowest width in the main scanning direction at the lower end.

In the navigation information display area 15NA, character information relating to driving, such as the speed of the vehicle, the traveling distance to the destination, the name of the intersection, and the driver's vehicle information such as a warning light are displayed. For displaying such information, there is less need to expand the width of an image (the width of the navigation information display area 15NA) in the main scanning direction, unlike the AR superimposition area 15AR. However, as illustrated in FIG. 11, the width of the AR superimposition area 15AR in the image displaying area needs to be expanded particularly in the main scanning direction.

The width of the AR superimposition area 15AR in the sub-scanning direction is made wider than the width of the navigation information display area 15NA in the sub-scanning direction in consideration of displaying an image that is AR-superimposed on the preceding vehicle. For example, if the width of the AR superimposition area 15AR in the sub-scanning direction is set to about 2.5 degrees starting from the eyes of the user, the AR superimposition display can be performed on a vehicle at 20 to 100 meters (m) ahead. Thus, the safety during the driving can be improved. The width of the navigation information display area 15NA in the sub-scanning direction does not need to be very large due to the content of the display image.

Based on such conditions, the image displaying area 15R1 is divided into the AR superimposition area 15AR and the navigation information display area 15NA. The first detection image area G1 and the second detection image area G2 are provided at an area where there is less need to display an image. Accordingly, the image displaying area can be expanded in view of the practicality of the AR superimposition display.

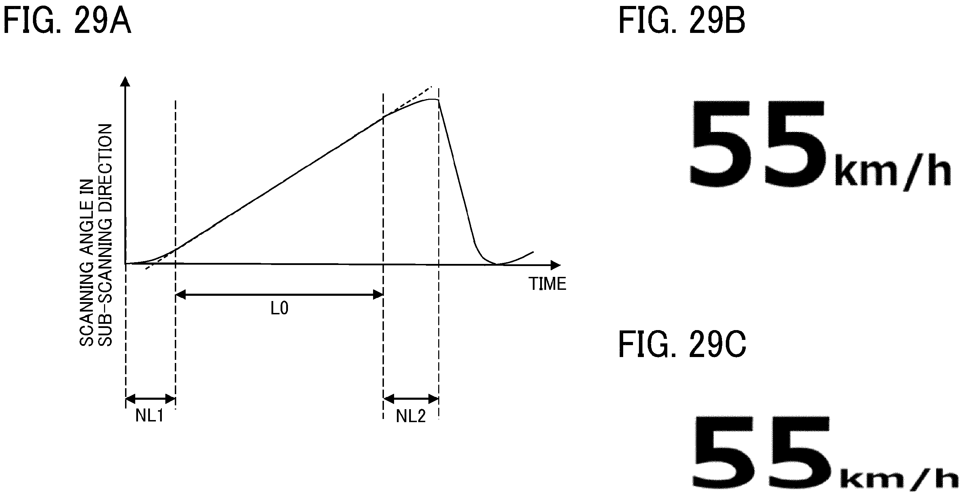

FIGs. 29A, 29B, and 29C are illustrations for describing the changes in the scanning angle in the sub-scanning direction over time.

Ideally, it is desired that the scanning angle of view linearly change with time. However, as illustrated in FIG. 29A, the scanning angle of view might nonlinearly change during the time periods NL1 and NL2 because the sensitivity near the amplitude ends in the sub-scanning direction does not match the sensitivity near the center of the amplitude due to the characteristics of material.

FIG. 29B is an illustration for describing the case in which an image is formed only in a linear region, and FIG. 29C is an illustration for describing the case in which an image is formed in an area including a nonlinear region. In the case of FIG. 29C, the density varies between the scanning lines, and the image is distorted. As described above, in the nonlinear region, although the image quality deteriorates, the variation in the density has a relatively low impact on the detection of the scanning.

In view of such circumstances, in the present embodiment, the image displaying area 15R1 is provided in the linear region that provides a good image quality, and the first and second detection image areas G1 and G2 are provided so as to include the non-linear region. With this configuration, an image displaying area can be expanded while achieving a higher viewability of a displayed image.

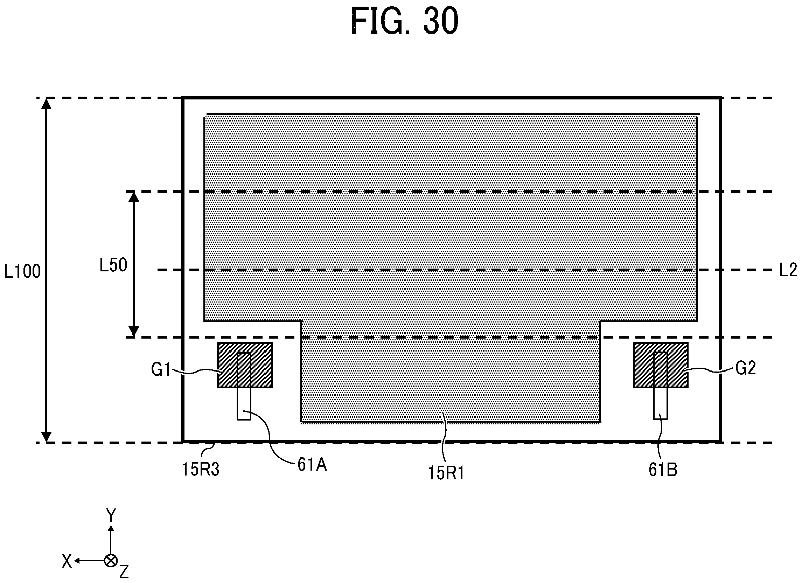

FIG. 30 is an illustration of a layout of the configuration in FIG. 28.

In FIG. 30, the range L100 covers the entire area (100%) of the two-dimensional scanning area 15R3 in the sub-scanning direction, and the range L50 covers a half (50%) of the two-dimensional scanning area 15R3 symmetrically with respect to the center of the two-dimensional scanning area 15R3 in the sub-scanning direction.

In view of the detection resolution of the image size and the linearity of the scanning angle of view in the sub-scanning direction, in the present embodiment, the first detection image G1 and the second detection image G2 are provided near the ends of the two-dimensional scanning area 15R3 in the sub-scanning direction, and the widest image displaying area 15R1 is provided in an area other than the first detection image area G1 and the second detection image area G2 within the two-dimensional scanning area 15R3. As illustrated in FIG. 30, it is desired that the first detection area G1 and the second detection area G2 be arranged outside the range L50 in the two-dimensional scanning area 15R3.

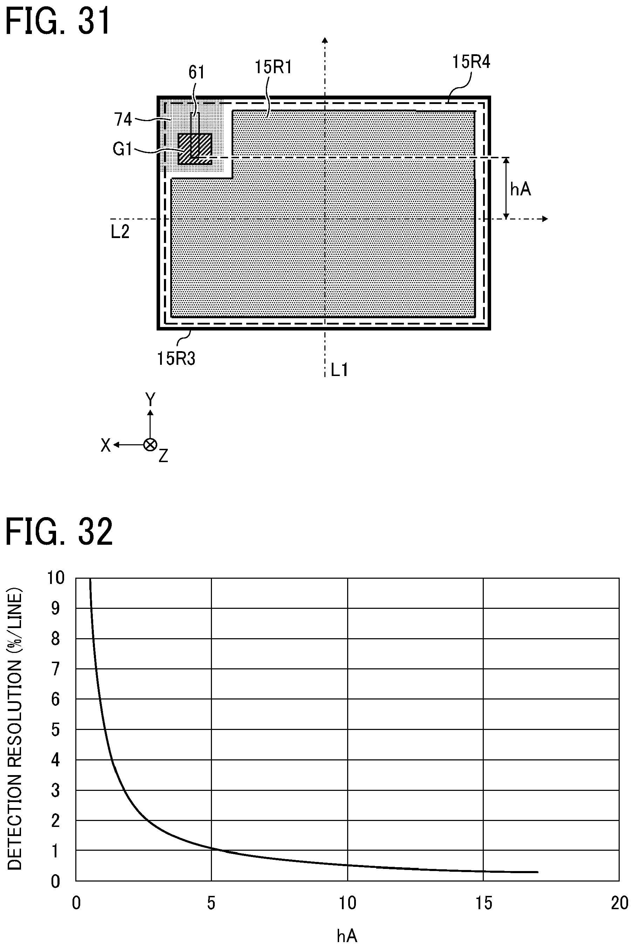

FIG. 31 is an illustration for describing a configuration of the correcting process according to a third modification of the embodiment in FIG. 13.

In a case that one light receiver 61 and one detection image area G1 are provided in the two-dimensional scanning area 15R3, the detection resolution of the image size increases and the image size can be control or adjusted with a higher accuracy as the light receiver 61 and the detection image area G1 are located closer to the end of the two-dimensional scanning area 15R3 in the sub-scanning direction.

In the present embodiment, when the amount of increase or decrease ΔNA in the number of scanning lines 630 received by the light receiver 61 is equal to 1, the rate of change in the oscillation angle of the MEMS mirror of the light deflector 13 in the sub-scanning direction is defined as the detection resolution of the image size, which is a percentage per line (% / line).

FIG. 31 indicates the height hA of the end face (the lower end face in the Y-direction) of the light receiver 61 from the center of the amplitude in the sub-scanning direction.

FIG. 32 is a graph for describing the detection resolution with respect to the image size in FIG. 31. In order to achieve displaying a high-quality image, the detection resolution of the image size is 1.0 % / line or less. By arranging the light receiver 61 and the detection image area G1 at a position in the sub-scanning direction defined by the height hA that provides such a detection resolution as described above, the image area is expanded while achieving displaying an image with a higher viewability.

As described above, the optical scanner (the display device 100) according to one embodiment of the present disclosure includes the light deflector 13 configured to scan the scanning area 15R3 (the scanning range) by deflecting a light beam emitted from a light source (the light-source device 11) in a first scanning direction and a second scanning direction orthogonal to the first scanning direction. The light-source device 11 is turned on to emit a light beam based on image data when the light deflector 13 forms an image within the image displaying area 15R1 of the scanning area 15R3 (the scanning range). Further, the light-source device 11 is turned on to emit another light beam when the light deflector 13 scans a detection area (the light receiver 61) outside the image displaying area 15R1. The optical scanner further includes a photosensor (the light receiver 61) configured to detect the light beam being deflected by the light deflector 13 within the detection area when the light deflector 13 scans the detection area. Further, the optical scanner includes a shielding area (the shield 74) so as to block the light beam deflected by the light deflector 13 between the image displaying area 15R1 and the detection area.

With this configuration, the light beam (irradiation light) scanning between the image displaying area 15R1 and the detection area (the light receiver 61) by the light deflector 13 is prevented from straying into the image displaying area 15R1. Thus, a decrease in the image quality can be substantially prevented.

With the shield 74 that blocks the light beam (irradiation light) deflected by the light deflector 13 and shed on an area between the image displaying area 15R1 and the detection area, the irradiation light deflected by the light deflector 13 and shed on the area between the image displaying area 15R1 and the detection area is prevented from straying into the image displaying area 15R1 with a simple configuration.

The optical scanner (the display device 100) includes a screen 15 that is scanned by the light deflector 13. The light deflector 13 forms an image within the image displaying area 15R1 on the screen 15. The shield 74 is disposed upstream from the screen 15 along the optical path of light from the light-source device 11 and covers a part of the screen 15.

With this configuration, the light beam scanning between the image displaying area 15R1 and the detection area by the light deflector 13 is prevented from straying into the image displaying area 15R1 of the screen 15.

Instead of the shield 74, a shielding area may be provided at an area between the image displaying area 15R1 and the detection area on the screen 15, on which the light beam being deflected by the light deflector 13 is incident, so as to prevent reflection and transmission of the light beam incident on the shielding area.

The shield 74 is disposed downstream from the detection area along the optical path of light from the light-source device 11 and covers a region at which the detection area is located. With this configuration, the light beam scanning the detection area by the light deflector 13 is prevented from the straying into the image displaying area 15R1. Thus, a decrease in the image quality can be substantially prevented.

The shield 74 is disposed upstream from the detection area along the optical path of light from the light-source device 11. The shield 74 includes a region (740Ri) configured to block the light G1L reflected by the detection area. This configuration substantially prevents the light G1L reflected by the surface of the detection area from becoming stray light and straying into the image displaying area 15R1 of the screen 15.

The detection area overlaps the image displaying area 15R1 in the first scanning direction and the second scanning direction. This arrangement reduces the area occupied only by the detection area within the scanning area 15R3 and increases the ratio of the image displaying area 15R1 with respect to the scanning area 15R3.

The irradiation intensity of light emitted from the light-source device 11 based on image data when the light deflector 13 forms an image within the image displaying area 15R1 is made different from the irradiation intensity of light emitted from the light-source device 11 when the light deflector 13 scans the detection area.

With this configuration, the irradiation intensity of light being shed on the detection area is made smaller the irradiation intensity of light being shed on the image displaying area 15R1. Accordingly, the light being shed on the detection area is prevented from straying into the image displaying area 15R1. Thus, a decrease in the image quality can be substantially prevented.

Further, the range of the irradiation intensity of light emitted from the light-source device 11 based on image data when the light deflector 13 forms an image within the image displaying area 15R1 is larger than the range of the irradiation intensity of light emitted from the light-source device 11 when the light deflector 13 scans the detection area. With this configuration, the light being shed on the detection area is prevented from straying into the image displaying area 15R1 while the image quality is increased. Thus, a decrease in the image quality can be substantially prevented.

The screen 15 is made of resin, and the detection area is provided at an area having a higher birefringence than the image displaying area 15R1. This configuration substantially prevents a decrease in the image quality due to a large birefringence.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

## Claims

1. An optical scanner (100) comprising:
a light source (11);
a light deflector (13) configured to deflect light emitted from the light source (11) to scan a scanning range in a first scanning direction and a second scanning direction orthogonal to the first scanning direction, the scanning range including an image displaying area and a detection area outside the image displaying area;
a controller (17) configured to:
control the light source (11) to emit a light beam based on image data when the light deflector (13) forms an image within the image displaying area; and
control the light source (11) to emit another light beam when the light deflector (13) scans the detection area with said another light beam;
a photosensor (61) configured to detect said another light beam scanning the detection area,
wherein a shielding area is provided to block off said another light beam deflected by the light deflector (13) between the image displaying area and the detection area.

2. The optical scanner (100) according to claim 1, further comprising a shield (74) configured to provide the shielding area that blocks off said another light beam deflected by the light deflector (13) between the image displaying area and the detection area.

3. The optical scanner (100) according to claim 2, further comprising a screen (15) to be scanned by the light deflector (13) with the light beam to form an image within the image displaying area on the screen (15),
wherein the shield (74) is disposed upstream from the screen (15) along an optical path of the light from the light source (11) and covers a part of the screen (15).

4. The optical scanner (100) according to claim 2 or 3,
wherein the shield (74) is disposed downstream from the detection area along the optical path of the light from the light source (11) and covers the detection area.

5. The optical scanner (100) according to any one of claims 2 to 4,
wherein the shield (74) is disposed upstream from the detection area along the optical path of the light from the light source (11) and includes an area to block off said another light beam reflected by the detection area.

6. The optical scanner (100) according to any one of claims 1 to 5,
wherein the detection area and the image displaying area overlap each other in the first scanning direction and the second scanning direction.

7. The optical scanner (100) according to any one of claims 1 to 6,
wherein the irradiation intensity of the light beam emitted from the light source (11) based on the image data when the light deflector (13) forms an image within the image displaying area is different from the irradiation intensity of said another light beam emitted from the light source (11) when the light deflector (13) scans the detection area.

8. The optical scanner (100) according to any one of claims 1 to 7,
wherein the range of the irradiation intensity of light emitted from the light source (11) based on image data when the light deflector (13) forms an image within the image displaying area is larger than the range of the irradiation intensity of light emitted from the light source (11) when the light deflector (13) scans the detection area.

9. The optical scanner (100) according to 3,
wherein the screen (15) is made of resin, and
wherein the detection area is provided at an area having a higher birefringence than a birefringence of the image displaying area.

10. A display system (1) comprising:
the optical scanner (100) according to any one of claims 1 to 9;
an imaging optical system (30) configured to reflect the light that has been deflected by the light deflector (13) to scan the screen (15) and projected by the screen (15), and
a reflector (50) configured to reflect the light reflected from the imaging optical system (30) so as to form a virtual image of the light.

11. A mobile object comprising the display system (1) according to claim 14,
wherein the reflector (50) is a windshield.
